(19) Europäisches Patentamt
European Patent Office
Office européen des brevets

(11) EP 4 694 450 A1

(12) EUROPEAN PATENT APPLICATION
published in accordance with Art. 153(4) EPC

(43) Date of publication:
11.02.2026 Bulletin 2026/07

(21) Application number: 23931449.5

(22) Date of filing: 06.04.2023

(51) International Patent Classification (IPC):
H04W 72/0446 (2023.01)

(52) Cooperative Patent Classification (CPC):
H04W 72/0446; H04W 72/0453

(86) International application number:
PCT/CN2023/086739

(87) International publication number:
WO 2024/207381 (10.10.2024 Gazette 2024/41)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Beijing Xiaomi Mobile Software Co.,
Ltd.
Beijing 100085 (CN)

(72) Inventor: LIU, Zhengxuan
Beijing 100085 (CN)

(74) Representative: Stöckeler, Ferdinand et al
Schoppe, Zimmermann, Stöckeler
Zinkler, Schenk & Partner mbB
Patentanwälte
Radlkoferstrasse 2
81373 München (DE)

(54) METHODS FOR CONFIGURING CHANNEL STATE INFORMATION - REFERENCE SIGNAL (CSI-RS) RESOURCES, AND APPARATUSES THEREFOR

(57) Disclosed in the embodiments of the present disclosure are methods for configuring channel state information-reference signal (CSI-RS) resources, and apparatuses therefor, which can be applied to a coherent joint transmission (CJT) scenario. A method for configuring CSI-RS resources comprises: a network device determining a configuration time-frequency pattern of a plurality of CSI-RS resources according to the number of ports of each CSI-RS resource and/or the number of CSI-RS resources among the plurality of CSI-RS resources configured for a terminal device, wherein each CSI-RS resource corresponds to a transmission reception point (TRP) used for coherent joint transmission; and the network device configuring the plurality of CSI-RS resources for the terminal device according to the configuration time-frequency pattern. By implementing the embodiments of the present disclosure, a plurality of CSI-RS resources can be more effectively configured for a terminal device, such that coherent joint transmission of each TRP among a plurality of TRPs is realized, and the impact on the system performance is reduced.

determining, according to a number of ports of each CSI-RS resource among N CSI-RS resources and/or a number of CSI-RS resources configured for a terminal, a configured time-frequency pattern of the N CSI-RS resources — 201

configuring, according to the configured time-frequency pattern, the N CSI-RS resources for the terminal — 202

FIG. 2

**Description**

**TECHNICAL FIELD**

The present disclosure relates to the field of communication technology, and in particular to a method and apparatus for configuring a channel state information reference signal (CSI-RS) resource.

**BACKGROUND**

In wireless communication systems, coordinated multi-point (CoMP) transmission technology may improve edge coverage and provide balanced service quality for each user in a service area. The base station calculates a precoding vector/matrix for each user based on channel state information (CSI) of each user, and then sends data streams to a plurality of users simultaneously on identical time-frequency resources.

In order to determine a modulation and coding level scheduled for each user, the base station needs to know a signal to interference plus noise ratio (SINR) of each user when the data streams are sent to the plurality of users simultaneously on identical time-frequency resources. In a new radio (NR) system, a channel state information-reference signal (CSI-RS) is defined for interference measurement. The base station indicates CSI-RS resources for channel measurement and CSI-RS resources for interference measurement to each user, which may accurately measures the SINR of each terminal.

However, when a number $N_{TRP}$ of transmission reception points (TRPs) used for coherent joint transmission (CJT) is more than one, how to configure all CSI-RS resources to achieve CJT of each TRP is an urgent problem to be solved.

**SUMMARY**

Embodiments of the present disclosure provide a method and apparatus for configuring channel state information-reference signal (CSI-RS) resources, which may be applied to a Internet of Vehicles (IoV), such as vehicle to everything (V2X) communication, long-term evolution-vehicle (LTE-V) communication, vehicle to vehicle (V2V) communication, etc., or may be used in intelligent driving, intelligent connected vehicles and other fields. By determining a configured time-frequency pattern of all CSI-RS resources and configuring all the CSI-RS resources to a terminal according to the configured time-frequency pattern, the network device obtains N pieces of downlink channel information from each transmission reception point (TRP) to the terminal via the configured N CSI-RS resources, which achieves coherent joint transmission (CJT) of each TRP in a plurality of TRPs. Configuring all the CSI-RS resources in this way may reduce the impact on system performance.

In a first aspect, an embodiment of the present disclosure provides a method for configuring a CSI-RS resources, performed by a network device. The method includes: determining, according to a number of ports of each CSI-RS resource among N CSI-RS resources and/or a number of CSI-RS resources configured for a terminal, a configured time-frequency pattern of the N CSI-RS resources, in which each CSI-RS resource corresponds to a TRP for CJT, and N is an integer greater than 1; and configuring, according to the configured time-frequency pattern, the N CSI-RS resources for the terminal.

In this technical solution, the network device determines the configured time-frequency pattern of the N CSI-RS resources according to the number of ports of each CSI-RS resource among the N CSI-RS resources and/or the number of CSI-RS resources configured for the terminal, and configures the N CSI-RS resources for the terminal according to the configured time-frequency pattern, so that the network device obtains N pieces of downlink channel information from the TRP to the terminal via the configured N CSI-RS resources, and achieves the CJT of each TRP in the plurality of TRPs. Configuring all the CSI-RS resources in this way may reduce the impact on system performance.

In a second aspect, an embodiment of the present disclosure provides another method for configuring CSI-RS resources, performed by a terminal. The method includes: receiving CSI-RS resource configuration information and/or CSI reporting resource configuration information sent by a network device, in which the CSI-RS resource configuration information includes a number of ports of each CSI-RS resource among N CSI-RS resources and/or a number of CSI-RS resources, each CSI-RS resource corresponds to a TRP for CJT, and N is an integer greater than 1; determining, according to the CSI-RS resource configuration information and/or the CSI reporting resource configuration information, a configured time-frequency pattern of the N CSI-RS resources; and determining, according to the configured time-frequency pattern, resource positions of the N CSI-RS resources.

In this technical solution, the terminal determines the configured time-frequency pattern of the N CSI-RS resources according to the number of ports of each CSI-RS resource among the N CSI-RS resources and/or the number of CSI-RS resources configured by the network device, and determines the resource positions of the N CSI-RS resources according to the configured time-frequency pattern, so that the network device obtains N pieces of downlink channel information from the TRP to the terminal via the configured N CSI-RS resources, and achieves the CJT of each TRP in the plurality of TRPs. Configuring all the CSI-RS resources in this way may reduce the impact on system performance.

In a third aspect, an embodiment of the present disclosure provides a communication apparatus having functions of implementing some or all of the functions of the network device in the method described in the above first aspect. For example, the functions of the communication apparatus may have the functions of some or all of the embodiments in the present disclosure, or may have the functions of implementing any one of the embodiments in the present disclosure alone. The functions may be implemented by hardware, or by hardware executing corresponding software. The hardware or software includes one or more units or modules corresponding to the above functions.

In an implementation, the structure of the communication apparatus may include a transceiver module and a processing module, and the processing module is configured to support the communication apparatus to perform corresponding functions in the above methods. The transceiver module is configured to support communication between the communication apparatus and other devices. The communication apparatus may further include a storage module, which is coupled to the transceiver module and the processing module and stores computer programs and data necessary for the communication apparatus.

In an implementation, the processing module is configured to determine, according to a number of ports of each CSI-RS resource among N CSI-RS resources and/or a number of CSI-RS resources configured for a terminal, a configured time-frequency pattern of the N CSI-RS resources, in which each CSI-RS resource corresponds to a TR) for CJT, and N is an integer greater than 1. The processing module also configures, according to the configured time-frequency pattern, the N CSI-RS resources for the terminal.

In a fourth aspect, an embodiment of the present disclosure provides a communication apparatus having functions of implementing some or all of the functions of the terminal in the method described in the above second aspect. For example, the functions of the communication apparatus may have the functions of some or all of the embodiments in the present disclosure, or may have the functions of implementing any one of the embodiments in the present disclosure alone. The functions may be implemented by hardware, or by hardware executing corresponding software. The hardware or software includes one or more units or modules corresponding to the above functions.

In an implementation, the structure of the communication apparatus may include a transceiver module and a processing module, and the processing module is configured to support the communication apparatus to perform corresponding functions in the above methods. The transceiver module is configured to support communication between the communication apparatus and other devices. The communication apparatus may further include a storage module, which is coupled to the transceiver module and the processing module and stores computer programs and data necessary for the communication apparatus.

In an implementation, the transceiver module is configured to receive CSI-RS resource configuration information and/or CSI reporting resource configuration information sent by a network device, in which the CSI-RS resource configuration information includes a number of ports of each CSI-RS resource among N CSI-RS resources and/or a number of CSI-RS resources, each CSI-RS resource corresponds to a TRP for CJT, and N is an integer greater than 1. The processing module is configured to determine, according to the CSI-RS resource configuration information and/or the CSI reporting resource configuration information, a configured time-frequency pattern of the N CSI-RS resources. The processing module is configured to determine, according to the configured time-frequency pattern, resource positions of the N CSI-RS resources.

In a fifth aspect, an embodiment of the present disclosure provides a communication device, which includes a processor. When the processor calls a computer program in a memory, the method described in the above first aspect is executed.

In a sixth aspect, an embodiment of the present disclosure provides a communication device, which includes a processor. When the processor calls a computer program in a memory, the method described in the above second aspect is executed.

In a seventh aspect, an embodiment of the present disclosure provides a communication device, which includes a processor and a memory storing a computer program. When the computer program is executed by the processor, the communication device is caused to perform the method described in the above first aspect.

In an eighth aspect, an embodiment of the present disclosure provides a communication device, which includes a processor and a memory storing a computer program. When the computer program is executed by the processor, the communication device is caused to perform the method described in the above second aspect.

In a ninth aspect, an embodiment of the present disclosure provides a communication device, which includes a processor and an interface circuit. The interface circuit is configured to receive code instructions and transmit the code instructions to the processor. The processor is configured to execute the code instructions, the communication device is caused to perform the method described in the above first aspect.

In a tenth aspect, an embodiment of the present disclosure provides a communication device, which includes a processor and an interface circuit. The interface circuit is configured to receive code instructions and transmit the code instructions to the processor. The processor is configured to execute the code instructions, the communication device is caused to perform the method described in the above second aspect.

In an eleventh aspect, an embodiment of the present disclosure provides a system for configuring CSI-RS resources, including the communication apparatus described in the above third aspect and the communication apparatus described in the above fourth aspect, or including the communication device described in the above fifth aspect and the communication device described in the above sixth aspect, or including the communication device described in the above seventh aspect and the communication device described in the above eighth aspect, or including the communication device described in the above ninth aspect and the communication device described in the above tenth aspect.

In a twelfth aspect, an embodiment of the present disclosure provides a computer-readable storage medium for storing instructions used by the above-mentioned network device, and when the instructions are executed, the network device is caused to perform the method described in the above first aspect.

In a thirteenth aspect, an embodiment of the present disclosure provides a readable storage medium for storing instructions used by the above-mentioned terminal, and when the instructions are executed, the terminal is caused to perform the method described in the above second aspect.

In a fourteenth aspect, the present disclosure further provides a computer program product including a computer program, which, when executed on a computer, enables the computer to perform the method described in the above first aspect.

In a fifteenth aspect, the present disclosure further provides a computer program product including a computer program, which, when executed on a computer, enables the computer to perform the method described in the above second aspect.

In a sixteenth aspect, the present disclosure provides a chip system including at least one processor and an interface for supporting the network device to implement the functions involved in the above first aspect, for example, determining or processing at least one of data or information involved in the above method. In one possible design, the chip system also includes a memory, which is used to store computer programs and data necessary for the network device. The chip system may be composed of chips, or may include chips and other discrete devices.

In a seventeenth aspect, the present disclosure provides a chip system including at least one processor and an interface for supporting the terminal to implement the functions involved in the above second aspect, for example, determining or processing at least one of data or information involved in the above method. In one possible design, the chip system also includes a memory, which is used to store computer programs and data necessary for the terminal. The chip system may be composed of chips, or may include chips and other discrete devices.

In an eighteenth aspect, the present disclosure provides a computer program, which, when executed on a computer, enables the computer to perform the method described in the above first aspect.

In the nineteenth aspect, the present disclosure provides a computer program which, when executed on a computer, enables the computer to perform the method described in the above second aspect.

**BRIEF DESCRIPTION OF THE DRAWINGS**

In order to more clearly explain the technical solutions in the embodiments of the disclosure or the background, accompanying drawings needed to be used in the embodiments of the disclosure or the background are described below.

FIG. 1 is a diagram of an architecture of a communication system according to an embodiment of the disclosure.
FIG. 2 is a flowchart of a method for configuring CSI-RS resources according to an embodiment of the disclosure.
FIG. 3 is a flowchart of another method for configuring CSI-RS resources according to an embodiment of the disclosure.
FIG. 4 is an example diagram of configuring N CSI-RS resources within one slot according to an embodiment of the present disclosure.
FIG. 5 is a flowchart of another method for configuring CSI-RS resources according to an embodiment of the disclosure.
FIG. 6 is a flowchart of another method for configuring CSI-RS resources according to an embodiment of the disclosure.
FIG. 7 is a flowchart of another method for configuring CSI-RS resources according to an embodiment of the disclosure.
FIG. 8 is a flowchart of another method for configuring CSI-RS resources according to an embodiment of the disclosure.
FIG. 9 is an example diagram of configuring N CSI-RS resources within two slots according to an embodiment of the present disclosure.
FIG. 10 is a flowchart of another method for configuring CSI-RS resources according to an embodiment of the present disclosure.
FIG. 11 is a flowchart of another method for configuring CSI-RS resources according to an embodiment of the present disclosure.

FIG. 12 is a flowchart of another method for configuring CSI-RS resources according to an embodiment of the present disclosure.

FIG. 13 is a flowchart of another method for configuring CSI-RS resources according to an embodiment of the present disclosure.

FIG. 14 is a structural diagram of a communication apparatus according to an embodiment of the present disclosure.

FIG. 15 is a structural diagram of a communication device according to an embodiment of the present disclosure.

FIG. 16 is a structural diagram of a chip according to an embodiment of the present disclosure.

## DETAILED DESCRIPTION

Embodiments of the present disclosure are described in detail below, examples of which are shown in the accompanying drawings, throughout which identical or similar reference numerals represent identical or similar elements or elements having identical or similar functions. The embodiments described below with reference to the accompanying drawings are exemplary and are intended to explain the present disclosure but should not be construed as limiting the present disclosure. In the description of the present disclosure, unless otherwise specified, the character "/" means "or", for example, A/B may mean A or B; the character "and/or" herein is only a way to describe an association relationship of associated objects, indicating that there may be three relationships. For example, A and/or B may mean: A exists alone, A and B exist at identical time, and B exists alone.

The terms used in the embodiments of the present disclosure are only for the purpose of describing specific embodiments and are not intended to limit the embodiments of the present disclosure. As used in the present disclosure and the appended claims, the singular forms "a/an" and "the" are intended to include the plural forms as well, unless the context clearly indicates otherwise.

It should be understood that although the terms first, second, third, etc. may be used to describe various information in the embodiments of the present disclosure, the information should not be limited to these terms. These terms are used only to distinguish information of identical type from one another. For example, without departing from the scope of the embodiments of the present disclosure, first information may also be referred to as second information, and similarly, second information may also be referred to as first information. Depending on the context, the words "if" and "in case of/that" as used herein may be interpreted as "when" or "while" or "in response to a determination."

Embodiments of the present disclosure are described in detail below, examples of which are shown in the accompanying drawings, throughout which identical or similar reference numerals represent identical or similar elements. The embodiments described below with reference to the accompanying drawings are exemplary and are intended to explain the present disclosure but should not be construed as limiting the present disclosure.

In wireless communication systems, coordinated multi-point (CoMP) transmission technology may improve edge coverage and provide balanced service quality for each user in a service area. The base station calculates a precoding vector/matrix for each user according to channel state information (CSI) of each user, and then sends data streams to a plurality of users simultaneously on identical time-frequency resources.

In order to determine a modulation and coding level scheduled for each user, the base station needs to know a signal to interference plus noise ratio (SINR) of each user when the data streams are sent to the plurality of users simultaneously on identical time-frequency resources. In a new radio (NR) system, a channel state information-reference signal (CSI-RS) is defined for interference measurement. The base station indicates CSI-RS resources for channel measurement and CSI-RS resources for interference measurement to each user, which may accurately measures the SINR of each terminal.

A number N (or $N_{TRP}$) of transmission reception points (TRPs) used for coherent joint transmission (CJT) may be configured to any one of 2, 3 or 4, and a corresponding CSI-RS resource is configured for each TRP for downlink channel estimation. A number of ports P of each CSI-RS resource may be configured as P=4, 8, 12, 16, 24, or 32, and the number of ports of each CSI-RS resource among all CSI-RS resources is identical. For different CJT conditions, a total number of CSI-RS ports when configuring various numbers of CSI-RS resource ports is shown in Table 1. When P = 4, 8, or 12, a density of the CSI-RS resource is configured as 1 resource unit/resource block/port (1 RE/RB/port). When P = 16, 24, or 32, the density of the CSI-RS resource is configured as 1 RE/RB/port or 0.5 RE/RB/port.

Table 1 Total number of CSI-RS ports when configuring various CSI-RS resource ports for CJT of a plurality of TRPs

| | | N 或 $N_{TRP}$ | | |
| --- | --- | --- | --- | --- |
| | | 2 | 3 | 4 |
| P | 4 | 8 | 12 | 16 |
| | 8 | 16 | 24 | 32 |

(continued)

| | | N 或 $N_{TRP}$ | | |
|---|---|---|---|---|
| | | 2 | 3 | 4 |
| | 12 | 24 | 36 | 48 |
| | 16 | 32 | 48 | 64 |
| | 24 | 48 | 72 | 96 |
| | 32 | 64 | 96 | 128 |

It may be understood that each element in Table 1 exists independently. These elements are exemplarily listed in identical table, but it does not mean that all elements in the table must exist at identical time as shown in the table. A value of each element is independent of a value of any other element in Table 1. Therefore, those skilled in the art may understand that the value of each element in Table 1 is an independent embodiment. It needs to be noted that the embodiments of the present disclosure include a plurality of tables. Each of the tables is similar to Table 1, which combines a plurality of independent embodiments into the same table, and each element in these tables should also be considered as an independent embodiment.

For different partial bandwidth sizes, subband sizes are also different, as shown in Table 2.

Table 2 Configurable subband size

| partial bandwidth (PRBs) | subband size (PRBs) |
|---|---|
| 24 - 72 | 4, 8 |
| 73 - 144 | 8, 16 |
| 145 - 275 | 16, 32 |

As may be seen from the above Tables 1 and 2, when $N_{TRP}$=4, P=32, and the density of the CSI-RS resource is 1, 128 resource elements (REs) may be occupied in a physical resource block (PRB), which means that all CSI-RS resources cannot be fully accommodated in a resource block (RB). That is, at this time, all the CSI-RS resources cannot be transmitted within one slot.

If the codebook parameter R=2 and the subband size is 4 RBs, and if low-density CSI-RS resources are configured, such as 0.5 RE/RB/port, degraded precoding performance may be caused. Therefore, how to configure all the CSI-RS resources to reduce the impact on system performance is a problem to be solved.

To this end, an embodiment of the present disclosure provides a method and apparatus for configuring CSI-RS resources, which may achieve CJT of each TRP in the plurality of TRPs and reduce the impact on system performance by configuring the plurality of CSI-RS resources for the terminal. In order to better understand the method for configuring CSI-RS resources disclosed in the embodiments of the present disclosure, a communication system to which the embodiments of the present disclosure are applicable is first described below.

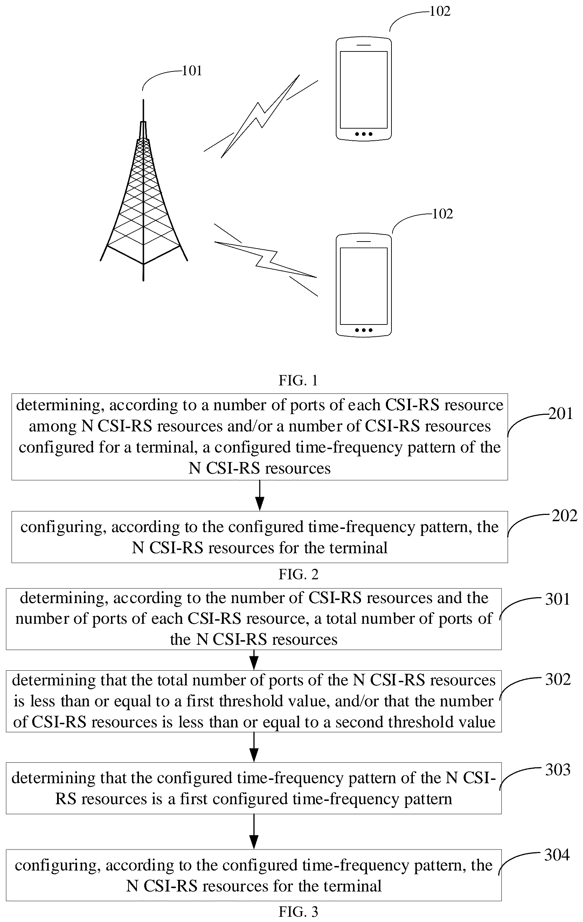

with reference to FIG. 1, it is a diagram of an architecture of a communication system according to an embodiment of the present disclosure. The communication system may include but is not limited to a network device and a terminal. The number and form of the devices shown in FIG. 1 are for example only, which do not constitute a limitation on the embodiments of the present disclosure. In actual applications, two or more network devices and two or more terminals may be included. The communication system shown in FIG. 1 includes one network device 101 and two terminals 102 as an example.

It needs to be noted that the technical solutions of the embodiments of the present disclosure may be applied to various communication systems, for example, a long term evolution (LTE) system, a fifth generation (5G) mobile communication system, a 5G NR system, or other future new mobile communication systems.

The network device 101 in the embodiments of the present disclosure is an entity on the network side for transmitting or receiving signals. For example, the network device 101 may be an evolved NodeB (eNB), a TRP, a next generation NodeB (gNB) in an NR system, a base station in other future mobile communication systems, or an access node in a wireless fidelity (WiFi) system, etc. The specific technology and specific device form adopted by the network device are not limited in the embodiments of the present disclosure. The network device provided by the embodiments of the present disclosure may be composed of a centralized unit (CU) and a distributed unit (DU). The CU may also be called a control unit. The CU-DU structure may be used to split a protocol layer of the network device such as a base station, so that some functions of the protocol layer is centrally controlled by the CU, and the remaining part or all of the functions of the protocol layer is distributed in the DU, which is centrally controlled by the CU.

The terminal 102 in the embodiments of the present disclosure is an entity on a user side for receiving or transmitting signals, such as a mobile phone. The terminal may also be referred to as a user equipment (UE), a mobile station (MS), a mobile terminal (MT), etc. The terminal may be a vehicle with a communication capability, a smart car, a mobile phone, a wearable device, a tablet computer, a computer with a wireless transceiver capability, a virtual reality (VR) terminal, an augmented reality (AR) terminal, a wireless terminal in industrial control, a wireless terminal in self-driving, a wireless terminal in remote medical surgery, a wireless terminal in smart grids, a wireless terminal in transportation safety, a wireless terminal in a smart city, a wireless terminal in a smart home, or the like. The specific technology and specific device form adopted by the terminal are not limited in the embodiments of the present disclosure.

It may be understood that the communication system described in the embodiments of the present disclosure is for the purpose of more clearly illustrating the technical solution of the embodiments of the present disclosure, and does not constitute a limitation on the technical solution provided by the embodiments of the present disclosure. Those skilled in the art may know that with the evolution of the system architecture and the emergence of new service scenarios, the technical solution provided by the embodiments of the present disclosure is also applicable to similar technical problems.

The method and apparatus for configuring CSI-RS resources according to the present disclosure are described in detail below with reference to the accompanying drawings.

With reference to FIG. 2, it is a flowchart of a method for configuring CSI-RS resources according to an embodiment of the present disclosure. It needs to be noted that the method may be performed by a network device. As shown in FIG. 2, the method may include but is not limited to the following steps at 201-202.

At 201, a configured time-frequency pattern of N CSI-RS resources is determined according to a number of ports of each CSI-RS resource among the N CSI-RS resources and/or a number of CSI-RS resources configured for the terminal.

In some embodiments, the number of ports of each CSI-RS resource among the N (or $N_{TRP}$) CSI-RS resources and/or the number of CSI-RS resources configured for the terminal may be determined. In the embodiments of the present disclosure, each CSI-RS resource corresponds to a TRP, and N (or $N_{TRP}$) is an integer greater than 1.

In an implementation, the network device may configure the number of CSI-RS resources (or the number of TRPs) for the terminal, where each CSI-RS resource corresponds to one TRP, i.e., the number of CSI-RS resources is identical with the number of TRPs. In this embodiment, the network device may determine the number of CSI-RS resources configured for the terminal, that is, determine the number of TRPs configured for the terminal.

In an implementation, the network device may configure the number of ports of each CSI-RS resource among the N CSI-RS resources for the terminal. In this embodiment, the network device may determine the number of ports of each CSI-RS resource among the N CSI-RS resources configured for the terminal, where the number of CSI-RS resources is consistent with the number of TRPs.

In an implementation, the network device may configure the number N of CSI-RS resources and the number of ports of each CSI-RS resource among the N CSI-RS resources for the terminal. In this embodiment, the network device may determine the number N of CSI-RS resources configured for the terminal and the number of ports of each CSI-RS resource among the N CSI-RS resources. Each TRP is associated with one CSI-RS resource for downlink channel estimation.

In a possible implementation, the number of TRPs (or the number of CSI-RS resources) N (or $N_{TRP}$) may be configured to be, but not limited to, any of the following values: 2, 3, or 4. As an example, the number of TRPs (or the number of CSI-RS resources) N (or $N_{TRP}$) may be configured as 2, 3 or 4.

In a possible implementation, the number of ports P of each CSI-RS resource may be configured to be, but not limited to, any of the following values: 4, 8, 12, 16, 24, or 32. As an example, the number of ports P of each CSI-RS resource may be configured as P=4, 8, 12, 16, 24, or 32. Among the N CSI-RS resources, the number of ports of each CSI-RS resource is identical.

Optionally, since each TRP is configured with one corresponding CSI-RS resource for downlink channel estimation, the number of CSI-RS resources is identical with the number of TRPs.

In an embodiment of the present disclosure, a first threshold value and a second threshold value may be predefined, where the first threshold value may be represented by the symbol $P_{th}$, and the first threshold value is a threshold value of the total number of CSI-RS resource ports of the N CSI-RS resources in a single slot (or one slot). The second threshold value may be represented by the symbol $N_{th}$, and the second threshold value is a threshold value of a total number of CSI-RS resources of the N CSI-RS resources in a single slot (or one slot). Optionally, the first threshold value and/or the second threshold value may be configured by the network device for the terminal, or may be pre-configured, or may be pre-defined by negotiation between the network device and the terminal, or may be reported by the terminal, which is not limited in the disclosure and will not be repeated again.

In an embodiment of the present disclosure, a constraint condition for configuring the N (or $N_{TRP}$) CSI-RS resources within one slot may be defined. In an implementation, the constraint condition for configuring the N (or $N_{TRP}$) CSI-RS resources within one slot is defined as follows: when $P_{tot} \leq P_{th}$ or $N_{TRP} \leq N_{th}$, the $N_{TRP}$ CSI-RS resources are within one slot (for convenience of description, this definition is referred to as Definition 1 below), where $P_{tot}$ is the total number of ports of the $N_{TRP}$ CSI-RS resources.

In an implementation, the constraint condition for configuring the N (or $N_{TRP}$) CSI-RS resources within one slot is defined as follows: when $P_{tot} > P_{th}$ or $N_{TRP} > N_{th}$, assuming that densities of the $N_{TRP}$ CSI-RS resources are identical and the densities are 0.5 RE/RB/port, the $N_{TRP}$ CSI-RS resources are within one slot (for convenience of description, this definition is referred to as Definition 2 below).

In an implementation, the constraint condition for configuring the N (or $N_{TRP}$) CSI-RS resources within one slot is defined as follows: when $P_{tot} > P_{th}$ and the codebook parameter R=1, assuming that the densities of the $N_{TRP}$ CSI-RS resources are identical and the densities are 0.5 RE/RB/port, the $N_{TRP}$ CSI-RS resources are within one slot (for convenience of description, this definition is referred to as Definition 3 below).

That is to say, the network device may determine the configured time-frequency pattern of the N CSI-RS resources based on the constraint conditions in the above Definition 1, Definition 2 or Definition 3. That is, it is determined whether the constraint conditions for configuring the N CSI-RS resources within one slot are met. If it is determined that the constraint conditions for configuring the N CSI-RS resources within one slot are met, a method for configuring the N CSI-RS resources within one slot may be adopted to configure the N CSI-RS resources within one slot. If it is determined that the constraint conditions for configuring the N CSI-RS resources within one slot are not met (that is, the constraint conditions in the above Definition 1, Definition 2 and Definition 3 are not met), a method for configuring the N CSI-RS resources within a plurality of slots may be adopted to configure the N CSI-RS resources within the plurality of slots. The plurality of slots may be adjacent slots or non-adjacent slots. As an example, if it is determined that the constraint conditions for configuring the N CSI-RS resources within one slot are not met (that is, the constraint conditions in the above Definition 1, Definition 2 and Definition 3 are not met), the N CSI-RS resources may be configured in two adjacent slots.

In a possible implementation, the network device may determine a total number $P_{tot}$ of ports of the N CSI-RS resources according to the number of CSI-RS resources and the number of ports of each CSI-RS resource. The network device determines the configured time-frequency pattern of the N CSI-RS resources according to the total number $P_{tot}$ of ports of the N CSI-RS resources and the first threshold value. As an example, the network device compares the total number $P_{tot}$ of ports of the N CSI-RS resources with the first threshold value, and determines the configured time-frequency pattern of the N CSI-RS resources according to a comparison result.

In a possible implementation, the network device may determine the configured time-frequency pattern of the N CSI-RS resources according to the number N (or $N_{TRP}$) of CSI-RS resources and the second threshold value. As an example, the network device compares the number N (or $N_{TRP}$) of CSI-RS resources with the second threshold value, and determines the configured time-frequency pattern of the N CSI-RS resources according to a comparison result.

In a possible implementation, the network device determines the total number $P_{tot}$ of ports of the N CSI-RS resources according to the number of CSI-RS resources and the number of ports of each CSI-RS resource. The network device determines the configured time-frequency pattern of the N CSI-RS resources according to the total number $P_{tot}$ of ports of the N CSI-RS resources, the number N (or $N_{TRP}$) of the CSI-RS resources, the first threshold value and the second threshold value. As an example, the network device compares the total number $P_{tot}$ of ports of the N CSI-RS resources with the first threshold value, compares the number N (or $N_{TRP}$) of CSI-RS resources with the second threshold value, and determines the configured time-frequency pattern of the N CSI-RS resources according to the two comparison results.

In a possible implementation, the network device determines the total number $P_{tot}$ of ports of the N CSI-RS resources according to the number of CSI-RS resources and the number of ports of each CSI-RS resource. The network device determines the density of each CSI-RS resource configured for the terminal, and determines the configured time-frequency pattern of the N CSI-RS resources according to the total number $P_{tot}$ of ports of the N CSI-RS resources, the first threshold value and the density of each CSI-RS resource.

In a possible implementation, the network device determines the density of each CSI-RS resource configured for the terminal, and determines the configured time-frequency pattern of the N CSI-RS resources according to the number N (or $N_{TRP}$) of CSI-RS resources, the second threshold value, and the density of each CSI-RS resource.

In a possible implementation, the network device determines the total number $P_{tot}$ of ports of the N CSI-RS resources according to the number of CSI-RS resources and the number of ports of each CSI-RS resource. The network device determines the density of each CSI-RS resource configured for the terminal, and determines the codebook parameter R configured for the terminal, and determines the configured time-frequency pattern of the N CSI-RS resources according to the total number $P_{tot}$ of ports of the N CSI-RS resources, the first threshold value, the codebook parameter R and the density of each CSI-RS resource.

It needs to be noted that, in some embodiments, the terms such as "codebook", "codeword", and "precoding vector/matrix" may be used interchangeably. For example, the codebook may be a collection of one or more codewords and precoding matrices.

At 202, the N CSI-RS resources are configured for the terminal according to the configured time-frequency pattern.

In this embodiment of the present disclosure, the N CSI-RS resources are used by the network device to obtain N pieces of downlink channel information from the TRP to the terminal.

In an embodiment of the present disclosure, the network device may determine a subband size configured for the terminal, and configure the N CSI-RS resources for the terminal by using a corresponding configured time-frequency pattern according to the subband size, the density of each CSI-RS resource, and the number of ports of each CSI-RS resource.

In an implementation, when the network device determines that the configured time-frequency pattern for the N CSI-RS resources is a first configured time-frequency pattern, the first configured time-frequency pattern indicates time-frequency domain resource mapping of the N CSI-RS resources within one slot. That is, when the N CSI-RS resources need to be configured within one slot, the network device may use the first configured time-frequency pattern to configure the N CSI-RS resources for the terminal within one slot.

In another implementation, the network device determines that the configured time-frequency pattern of the N CSI-RS resources is a second configured time-frequency pattern, and the second configured time-frequency pattern indicates time-frequency domain resource mapping of the N CSI-RS resources within a plurality of slots (such as two). If there is a need to configure the N CSI-RS resources within two slots, the network device may use the second configured time-frequency pattern to configure the N CSI-RS resources for the terminal within two slots.

By implementing this embodiment of the present disclosure, the network device may determine the configured time-frequency pattern suitable for the N CSI-RS resources according to the number of ports of each CSI-RS resource among the N CSI-RS resources and/or the number of CSI-RS resources configured for the terminal, and configure the N CSI-RS resources for the terminal according to the configured time-frequency pattern, so that the network device obtains N pieces of downlink channel information from the TRP to the terminal via the configured N CSI-RS resources, and achieves CJT of each TRP in the plurality of TRPs. By rationally configuring all the CSI-RS resources in this configuration manner, the impact on system performance may be reduced.

It needs to be noted that in the embodiments of the present disclosure, in the case of determining based on the above definition 1 that the $N_{TRP}$ CSI-RS resources may be configured within one slot, the network device may adopt the method for configuring the $N_{TRP}$ CSI-RS resources within one slot to configure the $N_{TRP}$ CSI-RS resources for the terminal. With reference to FIG. 3, it is a flowchart of another method for configuring CSI-RS resources according to an embodiment of the present disclosure. It needs to be noted that the method may be performed by a network device. As shown in FIG. 3, the method may include but is not limited to the following steps at 301-304.

At 301, a total number of ports of N CSI-RS resources is determined according to the number of ports of each CSI-RS resource among the N CSI-RS resources and the number of CSI-RS resources configured for the terminal.

In an embodiment of the present disclosure, each CSI-RS resource corresponds to a TRP for CJT, and N is an integer greater than 1.

Optionally, N may be used to represent the number of CSI-RS resources, and P may be used to represent the number of ports of each CSI-RS resource, and the number of ports of each of the CSI-RS resources is identical. In an implementation, the number N of CSI-RS resources is multiplied by the number P of ports of each CSI-RS resource, and the value obtained by the multiplication operation is determined as the total number of ports of the $N$ CSI-RS resources. The total number of ports of the $N$ CSI-RS resources may be represented by $P_{tot}$.

At 302, it is determined that the total number of ports of the N CSI-RS resources is less than or equal to a first threshold value, and/or that the number of CSI-RS resources is less than or equal to a second threshold value.

In an embodiment of the present disclosure, the first threshold value is a threshold value of a total number of CSI-RS resource ports of the N CSI-RS resources in a single slot, and the second threshold value is a threshold value of a total number of CSI-RS resources of the N CSI-RS resources in a single slot.

In a possible implementation, the network device determines a configured time-frequency pattern of the N CSI-RS resources according to the total number $P_{tot}$ of ports of the N CSI-RS resources and the first threshold value. As an example, the network device compares the total number $P_{tot}$ of ports of the N CSI-RS resources with the first threshold value to determine whether the total number of ports of the N CSI-RS resources is less than or equal to the first threshold value. If the total number of ports of the N CSI-RS resources is less than or equal to the first threshold value, that is, $P_{tot} \leq P_{th}$, the network device may execute the step 303, that is, determining that the configured time-frequency pattern of the N CSI-RS resources is a first configured time-frequency pattern. That is, the N CSI-RS resources may be configured within one slot.

In a possible implementation, the network device may determine the configured time-frequency pattern of the N CSI-RS resources according to the number N (or $N_{TRP}$) of CSI-RS resources and the second threshold value. As an example, the network device compares the number N (or $N_{TRP}$) of CSI-RS resources with the second threshold value to determine whether the number N (or $N_{TRP}$) of CSI-RS resources is less than or equal to the second threshold value. If the number $N_{TRP}$ of CSI-RS resources is less than or equal to the second threshold value, that is, $N_{TRP} \leq N_{th}$, the network device may execute the step 303, that is, determining that the configured time-frequency pattern of the N CSI-RS resources is the first configured time-frequency pattern. That is, the N CSI-RS resources may be configured within one slot.

In a possible implementation, the network device determines the total number $P_{tot}$ of ports of the N CSI-RS resources according to the number of CSI-RS resources and the number of ports of each CSI-RS resource. The network device determines the configured time-frequency pattern of the N CSI-RS resources according to the total number $P_{tot}$ of ports of the N CSI-RS resources, the number N (or $N_{TRP}$) of the CSI-RS resources, the first threshold value and the second threshold value. As an example, the network device compares the total number $P_{tot}$ of ports of the N CSI-RS resources with the first threshold value, compares the number N (or $N_{TRP}$) of CSI-RS resources with the second threshold value, and determines whether the total number $P_{tot}$ of ports of the N CSI-RS resources is less than or equal to the first threshold value and whether the number of CSI-RS resources is less than or equal to the second threshold value. If the total number of ports of the N CSI-RS resources is less than or equal to the first threshold value and the number $N_{TRP}$ of CSI-RS resources is less than or equal to the second threshold value, that is, $P_{tot} \leq P_{th}$ *and* $N_{TRP} \leq N_{th}$, the network device may execute the step 303, that is, determining that the configured time-frequency pattern of the N CSI-RS resources is the first configured time-frequency pattern. That is, the N CSI-RS resources may be configured within one slot.

At 303, it is determined that the configured time-frequency pattern of the N CSI-RS resources is a first configured time-frequency pattern.

In an embodiment of the present disclosure, the first configured time-frequency pattern indicates time-frequency domain resource mapping of the N CSI-RS resources within one slot.

That is to say, when the network device determines that the total number of ports of the N CSI-RS resources is less than or equal to the first threshold value, and/or the number of CSI-RS resources is less than or equal to the second threshold value, it may be determined that the configured time-frequency pattern of the N CSI-RS resources is the first configured time-frequency pattern. That is, the N CSI-RS resources may be configured within one slot.

At 304, the N CSI-RS resources are configured for the terminal according to the configured time-frequency pattern.

In an embodiment of the present disclosure, the network device determines that the configured time-frequency pattern of the N CSI-RS resources is the first configured time-frequency pattern. The first configured time-frequency pattern may be used to configure the N CSI-RS resources within one slot, so as to configure the N CSI-RS resources for the terminal. That is, the network device may configure the N CSI-RS resources within one slot, so as to configure the N CSI-RS resources for the terminal.

Optionally, in an embodiment of the present disclosure, the present disclosure defines the method for configuring the N CSI-RS resources within one slot as follows: Manner 1-1, configuring the N CSI-RS resources with identical or different densities of the CSI-RS resources within one slot. In an implementation, the network device may determine a subband size configured for the terminal; the network device may determine a density of each CSI-RS resource configured for the terminal, in which the density of each CSI-RS resource is identical or different; and the network device may configure the N CSI-RS resources within one slot by using the first configured time-frequency pattern according to the subband size, the density of each CSI-RS resource, and the number of ports of each CSI-RS resource. As an example, the network device may configure the N CSI-RS resources with identical densities of the CSI-RS resources within one slot according to the subband size and the number of ports of each CSI-RS resource. Alternatively, the network device may configure the N CSI-RS resources with different densities of the CSI-RS resources within one slot according to the subband size and the number of ports of each CSI-RS resource. In a possible implementation, when the N CSI-RS resources are configured within one slot, the N CSI-RS resources may be configured with the densities less than 0.5 RE/RB/port, for example, the densities may be 0.25 RE/RB/port.

Optionally, in an embodiment of the present disclosure, the present disclosure defines the method for configuring the N CSI-RS resources within one slot as follows: Manner 1-2, where the configured N CSI-RS resources have the identical densities that are 0.5 RE/RB/port, and the N CSI-RS resources may be configured according to a PRB resource index. As an example, a first CSI-RS resource and a second CSI-RS resource are configured according to the PRB resource index. For example, the first CSI-RS resource is configured at an odd-numbered position of the PRB resource index, and the second CSI-RS resource is configured at an even-numbered position of the PRB resource index. A number of CSI-RS resources included in the first CSI-RS resource is $N_1$, such as, the first $\left\lceil \frac{N}{2} \right\rceil$ CSI-RS resources or the last $\left\lceil \frac{N}{2} \right\rceil$ CSI-RS resources. A number of CSI-RS resources included in the second CSI-RS resource is $N\text{-}N_1$.

In an implementation, the network device may determine a subband size configured for the terminal; the network device determines a density of each CSI-RS resource configured for the terminal, in which the density of each CSI-RS resource is identical and the density is 0.5 RE/RB/port; the network device determines a number of PRBs configured for the terminal; and the network device configures the N CSI-RS resources within one slot by using the first configured time-frequency pattern according to the PRB resource index, the subband size, the density of each CSI-RS resource, and the number of ports of each CSI-RS resource.

As an example, the network device may configure the first CSI-RS resource among the N CSI-RS resources at the odd-numbered position of the PRB resource index and configure the second CSI-RS resource among the N CSI-RS resources at the even-numbered position of the PRB resource index by using the first configured time-frequency pattern according to the subband size, the density of each CSI-RS resource and the number of ports of each CSI-RS resource.

Alternatively, as another example, the network device may configure the first CSI-RS resource among the N CSI-RS resources at the even-numbered position of the PRB resource index and configure the second CSI-RS resource among the N CSI-RS resources at the odd-numbered position of the PRB resource index by using the first configured time-frequency pattern according to the subband size, the density of each CSI-RS resource and the number of ports of each CSI-RS resource. The number of CSI-RS resources included in the first CSI-RS resource is $N_1$, and a calculation formula of $N_1$ is expressed as follows: $N_1 = \left\lceil \frac{N}{2} \right\rceil$ or $\left\lfloor \frac{N}{2} \right\rfloor$, where $\lceil \rceil$ is a rounded-up function, $\lfloor \rfloor$ is a rounded-down function, and N is the number of CSI-RS resources. The number of CSI-RS resources included in the second CSI-RS resource is N-$N_1$. For example, the CSI-RS resources included in the first CSI-RS resource may be the first $\left\lceil \frac{N}{2} \right\rceil$ or $\left\lfloor \frac{N}{2} \right\rfloor$ CSI-RS resources among the N CSI-RS resources, and the CSI-RS resources included in the second CSI-RS resource are the CSI-RS resources among the N CSI-RS resources excluding the first CSI-RS resource. Alternatively, the CSI-RS resources included in the first CSI-RS resources may be the last $\left\lceil \frac{N}{2} \right\rceil$ or $\left\lfloor \frac{N}{2} \right\rfloor$ CSI-RS resources among the N CSI-RS resources, and the CSI-RS resources included in the second CSI-RS resources are the CSI-RS resources among the N CSI-RS resources excluding the first CSI-RS resource.

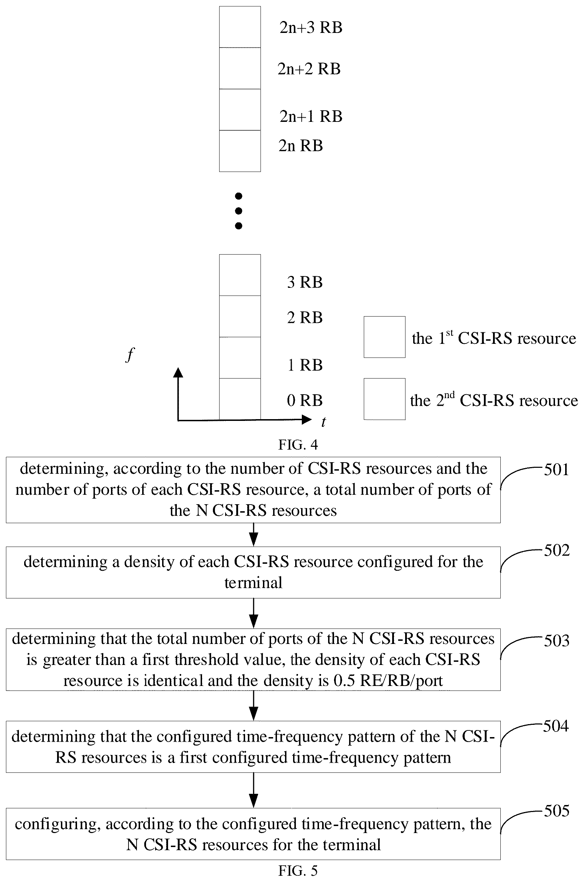

For example, let a threshold value of the total number of CSI-RS resource ports of the N CSI-RS resources within one slot be $P_{th}$=96. Assuming that the base station (gNB) configures for the terminal a CSI-RS resource set containing N = 2 CSI-RS resources (each of which corresponds to one TRP and has 32 ports, the density of each CSI-RS resource being 0.5 RE/RB/port), it is determined that the total number of ports of the N CSI-RS resources is $P_{tot}$ = 64, $P_{tot}$ = 64 $\leq$ $P_{th}$ = 96. According to the definition (such as the above definition 1) of CSI-RS resource configuration conditions, the network device may configure the two CSI-RS resources within one slot. As shown in FIG. 4, the network device may use the above Manner 1-2 to configure the two CSI-RS resources within one slot, such as configuring the first CSI-RS resource at an even-numbered position of the RB index and configuring the second CSI-RS resource at an odd-numbered position of the RB index.

By implementing this embodiment of the present disclosure, when the network device determines that the total number of ports of the N CSI-RS resources is less than or equal to the first threshold value, and/or the number of CSI-RS resources is less than or equal to the second threshold value, the N CSI-RS resources may be configured within one slot. By rationally configuring all the CSI-RS resources, the impact on system performance may be reduced.

It needs to be noted that in the embodiments of the present disclosure, in the case of determining based on the above Definition 2 that the N CSI-RS resources may be configured within one slot, the network device may adopt the method for configuring the N CSI-RS resources within one slot, so as to configure the N CSI-RS resources for the terminal. With reference to FIG. 5, it is a flowchart of another method for configuring CSI-RS resources according to an embodiment of the present disclosure. It needs to be noted that the method may be performed by a network device. As shown in FIG. 5, the method may include but is not limited to the following steps at 501-505.

At 501, a total number of ports of the N CSI-RS resources is determined according to the number of ports of each CSI-RS resource among the N CSI-RS resources and the number of CSI-RS resources configured for the terminal.

In an embodiment of the present disclosure, each CSI-RS resource corresponds to one TRP for CJT, and N is an integer greater than 1.

In the embodiments of the present disclosure, the step 501 may be implemented in any of the ways in the embodiments of the present disclosure, which is not limited in the embodiments of the present disclosure and will not be repeated again.

At 502, a density of each CSI-RS resource configured for the terminal is determined.

In an implementation, when the network device configures the N CSI-RS resources for the terminal, there is a need to configure N densities of the CSI-RS resources for the terminal. The network device may determine the density of each CSI-RS resource configured for the terminal. The densities of the N CSI-RS resources may be identical.

At 503, it is determined that the total number of ports of the N CSI-RS resources is greater than a first threshold value, the density of each CSI-RS resource is identical and the density is 0.5 RE/RB/port.

In an embodiment of the present disclosure, the first threshold value is a threshold value of a total number of CSI-RS resource ports of the N CSI-RS resources in a single slot.

In a possible implementation, the network device determines the configured time-frequency pattern of the N CSI-RS resources according to the total number $P_{tot}$ of ports of the N CSI-RS resources, the first threshold value, and the density of each CSI-RS resource. As an example, the network device compares the total number $P_{tot}$ of ports of the N CSI-RS resources with the first threshold value, and determines whether the densities of the CSI-RS resources are identical and whether the densities are 0.5 RE/RB/port. If the total number $P_{tot}$ of ports of the N CSI-RS resources is greater than the first threshold value, and the density of each CSI-RS resource is identical and the density is 0.5 RE/RB/port (that is, the constraint condition in the above Definition 2 "when $P_{tot}$ > $P_{th}$, assuming that the densities of the $N_{TRP}$ CSI-RS resources are identical and the densities are 0.5 RE/RB/port" is met), then the network device may execute the step 504, that is, determining that the configured time-frequency pattern of the N CSI-RS resources is the first configured time-frequency pattern. That is, the N CSI-RS resources may be configured within one slot.

At 504, it is determined that the configured time-frequency pattern of the N CSI-RS resources is a first configured time-frequency pattern.

In the embodiments of the present disclosure, the step 504 may be implemented in any of the ways in the embodiments of the present disclosure, which is not limited in the embodiments of the present disclosure and will not be repeated again.

At 505, the N CSI-RS resources are configured for the terminal according to the configured time-frequency pattern.

Optionally, in an embodiment of the present disclosure, the network device may determine a subband size configured for the terminal; the network device may configure the N CSI-RS resources within one slot by using the first configured time-frequency pattern according to the subband size, the density of each CSI-RS resource, and the number of ports of each CSI-RS resource. As an example, the network device may configure the N CSI-RS resources with identical densities of the CSI-RS resources within one slot according to the subband size and the number of ports of each CSI-RS resource, where the densities of the N CSI-RS resources are 0.5 RE/RB/port. Optionally, the CSI-RS resources with lower densities may be configured within one slot, for example, the densities may be 0.25 RE/RB/port.

Optionally, in an embodiment of the present disclosure, the network device may determine a subband size configured for the terminal; the network device may determine a number of PRB resources configured for the terminal; the network device may configure the N CSI-RS resources within one slot by using the first configured time-frequency pattern according to a PRB resource index, the subband size, the density of each CSI-RS resource, and the number of ports of each CSI-RS resource.

As an example, the network device may configure a first CSI-RS resource among the N CSI-RS resources at an odd-numbered position of the PRB resource index and configure a second CSI-RS resource among the N CSI-RS resources at an even-numbered position of the PRB resource index by using the first configured time-frequency pattern according to the subband size, the density of each CSI-RS resource and the number of ports of each CSI-RS resource. Alternatively, as another example, the network device may configure a first CSI-RS resource among the N CSI-RS resources at an even-numbered position of the PRB resource index and configure a second CSI-RS resource among the N CSI-RS resources at an odd-numbered position of the PRB resource index by using the first configured time-frequency pattern according to the subband size, the density of each CSI-RS resource and the number of ports of each CSI-RS resource. The number of CSI-RS resources included in the first CSI-RS resource is $N_1$, and a calculation formula of $N_1$ is expressed as follows: $N_1 = \left\lceil \frac{N}{2} \right\rceil$ or $\left\lfloor \frac{N}{2} \right\rfloor$, where $\lceil \rceil$ is a rounded-up function, $\lfloor \rfloor$ is a rounded-down function, and N is the number of CSI-RS resources. The number of CSI-RS resources included in the second CSI-RS resource is $N-N_1$. For example, the CSI-RS resources included in the first CSI-RS resource may be the first $\left\lceil \frac{N}{2} \right\rceil$ or $\left\lfloor \frac{N}{2} \right\rfloor$ CSI-RS resources among the N CSI-RS resources, and the CSI-RS resources included in the second CSI-RS resource are the CSI-RS resources among the N CSI-RS resources excluding the first CSI-RS resource. Alternatively, the CSI-RS resources included in the first CSI-RS resources may be the last $\left\lceil \frac{N}{2} \right\rceil$ or $\left\lfloor \frac{N}{2} \right\rfloor$ CSI-RS resources among the N CSI-RS resources, and the CSI-RS resources included in the second CSI-RS resources are the CSI-RS resources among the N CSI-RS resources excluding the first CSI-RS resource.

For example, let a threshold value of the total number of CSI-RS resource ports of the N CSI-RS resources within one slot be $P_{th}$=48. Assuming that the base station configures for the terminal a CSI-RS resource set containing N = 2 CSI-RS resources (each of which corresponds to one TRP and has 32 ports, the density of each CSI-RS resource being 0.5 RE/RB/port), it is determined that the total number of ports of the N CSI-RS resources is $P_{tot}$ = 64. Although $P_{tot}$ = 64 > $P_{th}$ = 48, the density of each CSI-RS resource is low. According to the definition (such as the above definition 2) of CSI-RS resource configuration conditions, the two CSI-RS resources may be configured within one slot. As shown in FIG. 4, the network device may use the above Manner 1-2 to configure the two CSI-RS resources within one slot, such as configuring the first CSI-RS resource at an even-numbered position of the RB index and configuring the second CSI-RS resource at an odd-numbered position of the RB index.

By implementing this embodiment of the present disclosure, when the network device determines that the total number of ports of the N CSI-RS resources is greater than the first threshold value, and the density of each CSI-RS resource is identical and the density is 0.5 RE/RB/port, the N CSI-RS resources may still be configured within one slot. By rationally configuring all the CSI-RS resources, the impact on system performance may be reduced.

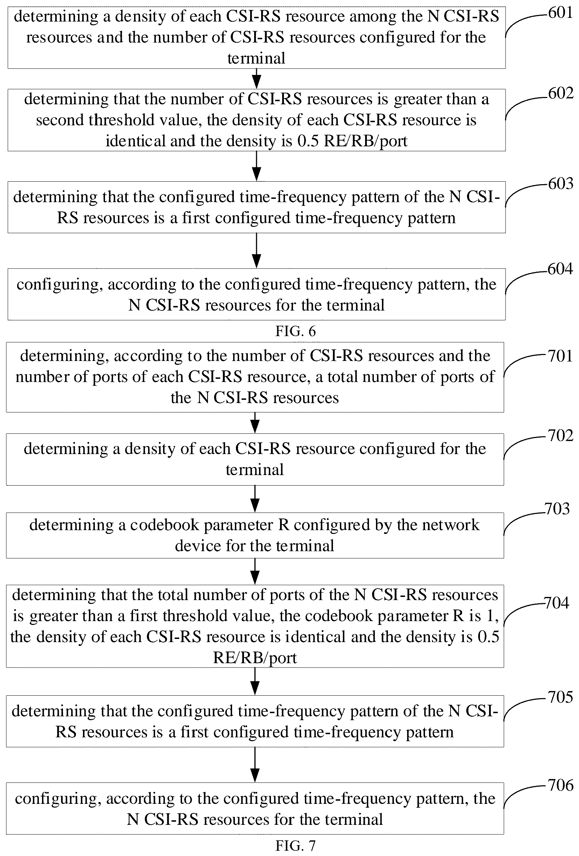

It needs to be noted that in the embodiments of the present disclosure, in the case of determining based on the above Definition 2 that the *N* CSI-RS resources may be configured within one slot, the network device may adopt the method for configuring the N CSI-RS resources within one slot, so as to configure the N CSI-RS resources for the terminal. With reference to FIG. 6, it is a flowchart of another method for configuring CSI-RS resources according to an embodiment of the present disclosure. It needs to be noted that the method may be performed by a network device. As shown in FIG. 6, the method may include but is not limited to the following steps at 601-604.

At 601, a density of each CSI-RS resource among the N CSI-RS resources and the number of CSI-RS resources configured for the terminal are determined.

In an embodiment of the present disclosure, each CSI-RS resource corresponds to one TRP for CJT, and N is an integer greater than 1.

In the embodiments of the present disclosure, the step 601 may be implemented in any of the ways in the embodiments of the present disclosure, which is not limited in the embodiments of the present disclosure and will not be repeated again.

At 602, it is determined that the number of CSI-RS resources is greater than a second threshold value, the density of each CSI-RS resource is identical and the density is 0.5 RE/RB/port.

In an embodiment of the present disclosure, the second threshold value is a threshold value of a total number of CSI-RS resources of the N CSI-RS resources in a single slot (or one slot).

In a possible implementation, the network device determines the density of each CSI-RS resource configured for the terminal, and determines the configured time-frequency pattern of the N CSI-RS resources according to the number N (or $N_{TRP}$) of CSI-RS resources, the second threshold value, and the density of each CSI-RS resource. As an example, the network device compares the number N (or $N_{TRP}$) of CSI-RS resources with the second threshold value, and determines whether densities of the CSI-RS resources are identical and whether the densities are 0.5 RE/RB/port. If the number N (or $N_{TRP}$) of CSI-RS resources is greater than the second threshold value, and the density of each CSI-RS resource is identical and the density is 0.5 RE/RB/port (that is, the constraint condition in the above Definition 2 "when $N_{TRP} > N_{th}$, assuming that assuming that densities of the $N_{TRP}$ CSI-RS resources are identical and the densities are 0.5 RE/RB/port" is met), then the network device may execute the step 603, that is, determining that the configured time-frequency pattern of the N CSI-RS resources is the first configured time-frequency pattern. That is, the N CSI-RS resources may be configured within one slot.

At 603, it is determined that the configured time-frequency pattern of the N CSI-RS resources is a first configured time-frequency pattern.

In the embodiments of the present disclosure, the step 603 may be implemented in any of the ways in the embodiments of the present disclosure, which is not limited in the embodiments of the present disclosure and will not be repeated again.

At 604, the N CSI-RS resources are configured for the terminal according to the configured time-frequency pattern.

In the embodiments of the present disclosure, the step 604 may be implemented in any of the ways in the embodiments of the present disclosure, which is not limited in the embodiments of the present disclosure and will not be repeated again.

By implementing this embodiment of the present disclosure, when the network device determines that the number of CSI-RS resources is greater than the second threshold value and the density of each CSI-RS resource is identical and the density is 0.5 RE/RB/port, the N CSI-RS resources may still be configured within one slot. By reasonably configuring all the CSI-RS resources, the impact on system performance may be reduced.

It needs to be noted that in the embodiments of the present disclosure, in the case of determining based on the above Definition 2 that the N CSI-RS resources may be configured within one slot, the network device may adopt the method for configuring the N CSI-RS resources within one slot, so as to configure the N CSI-RS resources for the terminal. With reference to FIG. 7, it is a flowchart of another method for configuring CSI-RS resources according to an embodiment of the present disclosure. It needs to be noted that the method may be performed by a network device. As shown in FIG7 , the method may include but is not limited to the following steps at 701-706.

At 701, a total number of ports of the N CSI-RS resources is determined according to the number of ports of each CSI-RS resource among the N CSI-RS resources and the number of CSI-RS resources configured for the terminal.

In an embodiment of the present disclosure, each CSI-RS resource corresponds to one TRP for CJT, and N is an integer greater than 1.

In the embodiments of the present disclosure, the step 701 may be implemented in any of the ways in the embodiments of the present disclosure, which is not limited in the embodiments of the present disclosure and will not be repeated again.

At 702, a density of each CSI-RS resource configured for the terminal is determined.

In the embodiments of the present disclosure, the step 702 may be implemented in any of the ways in the embodiments of the present disclosure, which is not limited in the embodiments of the present disclosure and will not be repeated again.

At 703, a codebook parameter R configured by the network device for the terminal is determined.

In an implementation, the network device may configure CSI reporting resources for the terminal, and the configured CSI reporting resources may include the codebook parameter R. The network device may determine the codebook parameter R according to the CSI reporting resources configured for the terminal.

At 704, it is determined that the total number of ports of the N CSI-RS resources is greater than a first threshold value, the codebook parameter R is 1, the density of each CSI-RS resource is identical and the density is 0.5 RE/RB/port.

In a possible implementation, the network device determines the total number $P_{tot}$ of ports of the N CSI-RS resources according to the number of CSI-RS resources and the number of ports of each CSI-RS resource. The network device determines the density of each CSI-RS resource configured for the terminal, determines the codebook parameter R configured for the terminal, and determines the configured time-frequency pattern of the N CSI-RS resources according to the total number $P_{tot}$ of ports of the N CSI-RS resources, the first threshold value, the codebook parameter R and the density of each CSI-RS resource. As an example, the network device compares the total number $P_{tot}$ of ports of the N CSI-RS resources with the first threshold value, determines whether the codebook parameter R is 1, and determines whether the densities of the N CSI-RS resources are identical. If it is determined that the total number $P_{tot}$ of ports of the N CSI-RS resources is greater than the first threshold value, the codebook parameter R is 1, the density of each CSI-RS resource is identical and the density is 0.5 RE/RB/port (that is, the constraint condition of the above Definition 3 is met), then the network device may execute the step 705, that is, determining that the configured time-frequency pattern of the N CSI-RS resources is the first configured time-frequency pattern. That is, the N CSI-RS resources may be configured within one slot.

At 705, it is determined that the configured time-frequency pattern of the N CSI-RS resources is a first configured time-frequency pattern.

In the embodiments of the present disclosure, the step 705 may be implemented in any of the ways in the embodiments of the present disclosure, which is not limited in the embodiments of the present disclosure and will not be repeated again.

At 706, the N CSI-RS resources are configured for the terminal according to the configured time-frequency pattern. The N CSI-RS resources are used by the network device to obtain N pieces of downlink channel information from the TRP to the terminal.

In the embodiments of the present disclosure, the step 706 may be implemented in any of the ways in the embodiments of the present disclosure, which is not limited in the embodiments of the present disclosure and will not be repeated again.

By implementing this embodiment of the present disclosure, when the network device determines that the total number of ports of the N CSI-RS resources is greater than the first threshold value, the codebook parameter R is 1, and the density of each CSI-RS resource is identical and the density is 0.5 RE/RB/port, the N CSI-RS resources may still be configured within one slot. By rationally configuring all the CSI-RS resources, the impact on system performance may be reduced.

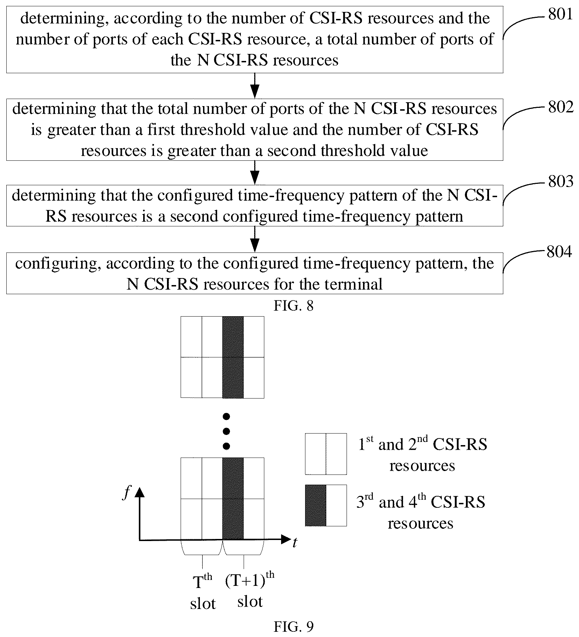

It needs to be noted that if the constraint conditions of the above definitions (such as Definition 1, Definition 2 or Definition 3) are not met, the network device may configure the N CSI-RS resources within the plurality of slots, such as configuring the N CSI-RS resources within two adjacent slots. With reference to FIG. 8, it is a flowchart of another method for configuring CSI-RS resources according to an embodiment of the present disclosure. It needs to be noted that the method may be performed by a network device. As shown in FIG. 8, the method may include but is not limited to the following steps at 801-804.

At 801, a total number of ports of the N CSI-RS resources is determined according to the number of ports of each CSI-RS resource among the N CSI-RS resources and the number of CSI-RS resources configured for the terminal.

In an embodiment of the present disclosure, each CSI-RS resource corresponds to one TRP for CJT, and N is an integer greater than 1.

In the embodiments of the present disclosure, the step 801 may be implemented in any of the ways in the embodiments of the present disclosure, which is not limited in the embodiments of the present disclosure and will not be repeated again.

At 802, it is determined that the total number of ports of the N CSI-RS resources is greater than a first threshold value and the number of CSI-RS resources is greater than a second threshold value.

In an embodiment of the present disclosure, the first threshold value is a threshold value of a total number of CSI-RS resource ports of the N CSI-RS resources in a single slot (or one slot), and the second threshold value is a threshold value of a total number of CSI-RS resources of the N CSI-RS resources in a single slot (or one slot).

In an implementation, the network device determines the configured time-frequency pattern of the N CSI-RS resources according to the total number $P_{tot}$ of ports of the N CSI-RS resources, the number N (or $N_{TRP}$) of CSI-RS resources, the first threshold value, and the second threshold value. As an example, the network device compares the total number $P_{tot}$ of ports of the N CSI-RS resources with the first threshold value, and compares the number of CSI-RS resources N (or $N_{TRP}$) with the second threshold value. If it is determined that the total number of ports of the N CSI-RS resources is greater than the first threshold value and the number of CSI-RS resources is greater than the second threshold value, the network device executes the step 803, that is, determining that the configured time-frequency pattern of the N CSI-RS resources is the second configured time-frequency pattern. That is, the N CSI-RS resources are configured within the plurality of slots, such as configuring the N CSI-RS resources within two adjacent slots.

At 803, it is determined that the configured time-frequency pattern of the N CSI-RS resources is a second configured time-frequency pattern.

In an embodiment of the present disclosure, the second configured time-frequency pattern indicates time-frequency domain resource mapping of the N CSI-RS resources within the plurality of slots.

That is to say, if the network device determines that the total number of ports of the N CSI-RS resources is greater than the first threshold value and the number of CSI-RS resources is greater than the second threshold value, the network device may determine that the configured time-frequency pattern of the N CSI-RS resources is the second configured time-frequency pattern. That is, the N CSI-RS resources may be configured within the plurality of slots.

At 804, the N CSI-RS resources are configured for the terminal according to the configured time-frequency pattern. The N CSI-RS resources are used by the network device to obtain N pieces of downlink channel information from the TRP to the terminal.

In an embodiment of the present disclosure, when the network device determines that the total number of ports of the N CSI-RS resources is greater than the first threshold value and the number of CSI-RS resources is greater than the second threshold value, the second configured time-frequency pattern is then used to configure the N CSI-RS resources within the plurality of slots, so as to configure the N CSI-RS resources for the terminal. That is, the network device may configure the N CSI-RS resources within the plurality of slots, so as to configure the N CSI-RS resources for the terminal. In an implementation, the network device determines the subband size configured for the terminal, and configures the N CSI-RS resources within the plurality of slots by using the second configured time-frequency pattern according to the subband size, the density of each CSI-RS resource, and the number of ports of each CSI-RS resource. For example, the network device may adopt the method for configuring the N CSI-RS resources within two adjacent slots, so as to configure the N CSI-RS resources for the terminal, where a time interval between the two slots is no more than X slots, where X is a positive integer.

Optionally, in an embodiment of the present disclosure, a method for configuring the N CSI-RS resources within two slots is defined as follows: Manner 2-1, configuring a first CSI-RS resource within a first slot and configuring a second CSI-RS resource within a second slot. The number of CSI-RS resources included in the first CSI-RS resource is $N_1$, and the number of CSI-RS resources included in the second CSI-RS resource is $N-N_1$.

In an implementation, the network device may determine the subband size configured for the terminal; the network device determines the density of each CSI-RS resource configured for the terminal. The network device configures the N CSI-RS resources within the plurality of slots by using the second configured time-frequency pattern according to the subband size, the density of each CSI-RS resource, and the number of ports of each CSI-RS resource. As an example, the network device may configure the N CSI-RS resources within two adjacent slots. For example, the network device may configure the first CSI-RS resource among the N CSI-RS resources within the first slot, and configure the second CSI-RS resource among the N CSI-RS resources within the second slot, in which a time interval between the first slot and the second slot is less than or equal to X slots, where X is a positive integer.

In a possible implementation, the number of CSI-RS resources included in the first CSI-RS resource is $N_1$, and the calculation formula of $N_1$ is expressed as follows: $N_1 = \left\lceil \dfrac{N}{2} \right\rceil \ or \ \left\lfloor \dfrac{N}{2} \right\rfloor$, where $\lceil \ \rceil$ is a rounded-up function, $\lfloor \ \rfloor$ is a rounded-down function, and N is the number of CSI-RS resources; the number of CSI-RS resources included in the second CSI-RS resource is $N-N_1$.

In a possible implementation, a density of the first CSI-RS resource is identical with a density of the second CSI-RS resource; or a density of the first CSI-RS resource is different from a density of the second CSI-RS resource. That is, in the case that the N CSI-RS resources are configured within two adjacent slots, the density of the first CSI-RS resources may be identical with or different from the density of the second CSI-RS resource configured within the two slots.

In a possible implementation, a time-frequency resource position of the first CSI-RS resource is identical with a time-frequency resource position of the second CSI-RS resource; or a time-frequency resource position of the first CSI-RS resource is different from a time-frequency resource position of the second CSI-RS resource; or time-frequency resource positions of a part of CSI-RS resources in the first CSI-RS resource are identical with time-frequency resource positions of a part of CSI-RS resources in the second CSI-RS resource; or time-frequency resource positions of a part of CSI-RS resources in the first CSI-RS resource are different from time-frequency resource positions of a part of CSI-RS resources in the second CSI-RS resource.

That is, in the case that the N CSI-RS resources are configured within two adjacent slots, the time-frequency resource positions of the first CSI-RS resource and the second CSI-RS resource configured within the two slots may be identical or different. Alternatively, the time-frequency resource positions of part of CSI-RS resources in the first CSI-RS resource and part of CSI-RS resources in the second CSI-RS resource configured within the two slots may be identical or different.

For example, let a threshold value of the total number of CSI-RS resource ports of the N CSI-RS resources in one

slot be $P_{th}$=48. Assuming that the gNB configures for the terminal a CSI-RS resource set containing N = 4 CSI-RS resources (each of which corresponds to one TRP and has 32 ports, the density of each CSI-RS resource being 1 RE/RB/port), it is determined that the total number of ports of the N CSI-RS resources is $P_{tot}$ = 128 because $P_{tot}$ = 128 > $P_{th}$ = 48, and the densities of the CSI-RS resources are greater than 0.5 RE/RB/port. According to the definition of CSI-RS resource configuration conditions, the 4 CSI-RS resources need to be configured within two slots. As shown in FIG. 9, the network device may adopt the above Manner 2-1 to configure the two CSI-RS resources within two slots, such as configuring the first and second CSI-RS resources in the $T^{th}$ slot, and configuring the third and fourth CSI-RS resources in the $(T+1)^{th}$ slot.

Optionally, in an embodiment of the present disclosure, a method for configuring the N CSI-RS resources within one slot is defined as follows: Manner 2-2, when CSI-RS resources within one slot of two adjacent slots are greater than or equal to two CSI-RS resources, the above "Manner 1-1" or "Manner 1-2" may be adopted to configure these CSI-RS resources within the certain slot, in which these CSI-RS resources refer to the CSI-RS resources that need to be configured within the certain slot.

In an implementation, when CSI-RS resources within the first slot are greater than or equal to two CSI-RS resources (i.e., the number of CSI-RS resources included in the first CSI-RS resource that needs to be configured within the first slot is greater than or equal to 2), the first CSI-RS resource may be configured within the first slot by using the above Manner 1-1. As an example, the network device determines that the number of CSI-RS resources included in the first CSI-RS resource is greater than or equal to 2, then the network device may configure the CSI-RS resources included in the first CSI-RS resource within the first slot, in which the densities of the CSI-RS resources included in the first CSI-RS resource are identical or different. Optionally, the first CSI-RS resource is configured within the first slot, and a CSI-RS resource with a density less than 0.5 RE/RB/port may be configured.

In another implementation, when CSI-RS resources within the first slot are greater than or equal to two CSI-RS resources (i.e., the number of CSI-RS resources included in the first CSI-RS resource that needs to be configured within the first slot is greater than or equal to 2), the first CSI-RS resource may be configured within the first slot by using the above Manner 1-2. As an example, when the network device determines that the number of CSI-RS resources included in the first CSI-RS resource is greater than or equal to 2, then the network device may determine the densities of the CSI-RS resources included in the first CSI-RS resource configured for the terminal, in which the densities of the CSI-RS resources included in the first CSI-RS resource are identical, and the densities are 0.5 RE/RB/port. The network device may configure the first CSI-RS resource within the first slot according to the PRB resource index and the densities of the CSI-RS resources included in the first CSI-RS resource.

For example, the network device may configure part of the CSI-RS resources in the first CSI-RS resource at odd-numbered positions of the PRB resource index, and configure the remaining CSI-RS resources in the first CSI-RS resource at even- numbered positions of the PRB resource index. A number of CSI-RS resources included in this part of CSI-RS resources is $N_2$, such as the first $\left\lceil \frac{N_1}{2} \right\rceil$ CSI-RS resources or the last $\left\lceil \frac{N_1}{2} \right\rceil$ CSI-RS resources, a number of CSI-RS resources included in the remaining CSI-RS resources is $N_1$-$N_2$, where $N_1$ is the number of CSI-RS resources included in the first CSI-RS resource.

In an implementation, when CSI-RS resources within the second slot are greater than or equal to two CSI-RS resources(i.e., the number of CSI-RS resources included in the second CSI-RS resource that needs to be configured within the second slot is greater than or equal to 2), the second CSI-RS resource may be configured within the second slot by using the above Manner 1-1. As an example, the network device determines that the number of CSI-RS resources included in the second CSI-RS resource is greater than or equal to 2, then the network device may configure the CSI-RS resources included in the second CSI-RS resource within the second slot, in which the densities of the CSI-RS resources included in the second CSI-RS resource are identical or different. Optionally, the second CSI-RS resource is configured within the second slot, and a CSI-RS resource with a density less than 0.5 RE/RB/port may be configured.

In another implementation, when CSI-RS resources within the second slot are greater than or equal to two CSI-RS resources(i.e., the number of CSI-RS resources included in the second CSI-RS resource that needs to be configured within the second slot is greater than or equal to 2), the second CSI-RS resource may be configured within the second slot by using the above Manner 1-2. As an example, when the network device determines that the number of CSI-RS resources included in the second CSI-RS resource is greater than or equal to 2, then the network device determines the densities of the CSI-RS resources included in the second CSI-RS resource configured for the terminal, in which the densities of the CSI-RS resources included in the second CSI-RS resource are identical, and the densities are 0.5 RE/RB/port. The network device may configure the second CSI-RS resource within the second slot according to the PRB resource index and the densities of the CSI-RS resources included in the second CSI-RS resource.

For example, the network device may configure part of the CSI-RS resources in the second CSI-RS resource at odd-numbered positions of the PRB resource index, and configure the remaining CSI-RS resources in the second CSI-RS resource at even-numbered positions of the PRB resource index. A number of CSI-RS resources included in this part of CSI-RS resources is $N_3$, such as the first $\left\lceil \frac{N-N_1}{2} \right\rceil$ CSI-RS resources or the last $\left\lceil \frac{N-N_1}{2} \right\rceil$ CSI-RS resources, and a number of CSI-RS resources included in the remaining CSI-RS resources is $N - N_1 - N_3$, where $N_1$ is the number of CSI-RS resources included in the first CSI-RS resource, and $N - N_1$ is the number of CSI-RS resources included in the second CSI-RS resource.

By implementing this embodiment of the present disclosure, when the network device determines that the total number of ports of the N CSI-RS resources is greater than the first threshold value and the number of CSI-RS resources is greater than the second threshold value, the N CSI-RS resources may be configured within the plurality of slots. By reasonably configuring all the CSI-RS resources, the impact on system performance may be reduced.

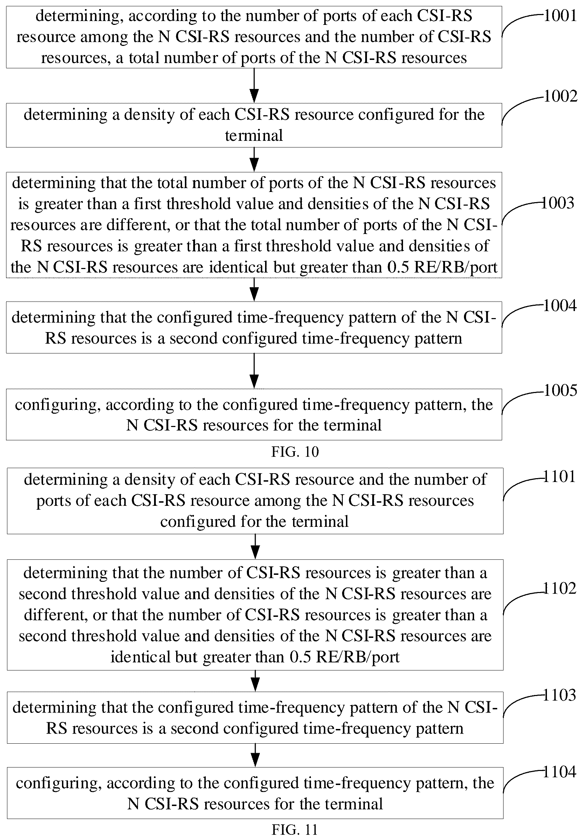

With reference to FIG. 10, it is a flowchart of another method for configuring CSI-RS resources according to an embodiment of the present disclosure. It needs to be noted that the method may be performed by a network device. As shown in FIG. 10, the method may include but is not limited to the following steps at 1001-1005.

At 1001, a total number of ports of the N CSI-RS resources is determined according to the number of ports of each CSI-RS resource among the N CSI-RS resources and the number of CSI-RS resources configured for the terminal.

In an embodiment of the present disclosure, each CSI-RS resource corresponds to one TRP for CJT, and N is an integer greater than 1.

In the embodiments of the present disclosure, the step 1001 may be implemented in any of the ways in the embodiments of the present disclosure, which is not limited in the embodiments of the present disclosure and will not be repeated again.

At 1002, a density of each CSI-RS resource configured for the terminal is determined.

In the embodiments of the present disclosure, the step 1002 may be implemented in any of the ways in the embodiments of the present disclosure, which is not limited in the embodiments of the present disclosure and will not be repeated again.

At 1003, it is determined that the total number of ports of the N CSI-RS resources is greater than the first threshold value and densities of the N CSI-RS resources are different, or that the total number of ports of the N CSI-RS resources is greater than the first threshold value and densities of the N CSI-RS resources are identical but greater than 0.5 RE/RB/port.

In an embodiment of the present disclosure, the first threshold value is a threshold value of a total number of CSI-RS resource ports of the N CSI-RS resources in a single slot (or one slot).

In a possible implementation, the network device determines the configured time-frequency pattern of the N CSI-RS resources according to the total number $P_{tot}$ of ports of the N CSI-RS resources, the first threshold value, and the density of each CSI-RS resource. As an example, the network device compares the total number $P_{tot}$ of ports of the N CSI-RS resources with the first threshold value and determines whether the densities of the N CSI-RS resources are identical. If the total number of ports of the N CSI-RS resources is greater than the first threshold value and the densities of the N CSI-RS resources are different, the network device may execute the step 1004. Alternatively, if the total number of ports of the N CSI-RS resources is greater than the first threshold value, the densities of the N CSI-RS resources are identical and the densities are determined to be greater than 0.5 RE/RB/port, the network device may execute the step 1004, that is, determining that the configured time-frequency pattern of the N CSI-RS resources is the second configured time-frequency pattern. That is, the N CSI-RS resources may be configured within the plurality of slots, such as configuring the N CSI-RS resources within two adjacent slots.

At 1004, it is determined that the configured time-frequency pattern of the N CSI-RS resources is a second configured time-frequency pattern.

In an embodiment of the present disclosure, the second configured time-frequency pattern indicates time-frequency domain resource mapping of the N CSI-RS resources within the plurality of slots.

That is to say, when the network device determines that the total number of ports of the N CSI-RS resources is greater than the first threshold value and the densities of the N CSI-RS resources are different, or that the total number of ports of the N CSI-RS resources is greater than the first threshold value and the densities of the N CSI-RS resources are identical but the densities are greater than 0.5 RE/RB/port, then the network device may determine that the configured time-frequency pattern of the N CSI-RS resources is the second configured time-frequency pattern. That is, the N CSI-RS resources may be configured within the plurality of slots.

At 1005, the N CSI-RS resources are configured for the terminal according to the configured time-frequency pattern. The N CSI-RS resources are used by the network device to obtain N pieces of downlink channel information from the TRP to the terminal.

In the embodiments of the present disclosure, the step 1005 may be implemented in any of the ways of the step 804 in the embodiments of the present disclosure, which is not limited in the embodiments of the present disclosure and will not be repeated again.

By implementing this embodiment of the present disclosure, when the network device determines that the total number of ports of the N CSI-RS resources is greater than the first threshold value and the densities of the N CSI-RS resources are different, or that the total number of ports of the N CSI-RS resources is greater than the first threshold value and the densities of the N CSI-RS resources are identical but greater than 0.5 RE/RB/port, the N CSI-RS resources may be configured within the plurality of slots. By reasonably configuring all the CSI-RS resources, the impact on system performance may be reduced.

With reference to FIG. 11, it is a flowchart of another method for configuring CSI-RS resources according to an embodiment of the present disclosure. It needs to be noted that the method may be performed by a network device. As shown in FIG. 11, the method may include but is not limited to the following steps at 1101-1104.

At 1101, a density of each CSI-RS resource among the N CSI-RS resources and the number of ports of each CSI-RS resource configured for the terminal are determined.

In an embodiment of the present disclosure, each CSI-RS resource corresponds to one TRP for CJT, and N is an integer greater than 1.

In the embodiments of the present disclosure, the step 1101 may be implemented in any of the ways in the embodiments of the present disclosure, which is not limited in the embodiments of the present disclosure and will not be repeated again.

At 1102, it is determined that the number of CSI-RS resources is greater than a second threshold value and densities of the N CSI-RS resources are different, or that the number of CSI-RS resources is greater than a second threshold value and densities of the N CSI-RS resources are identical but greater than 0.5 RE/RB/port.

In an embodiment of the present disclosure, the second threshold value is a threshold value of a total number of CSI-RS resources of the N CSI-RS resources in a single slot (or one slot).

In a possible implementation, the network device determines the configured time-frequency pattern of the N CSI-RS resources according to the number N (or $N_{TRP}$) of CSI-RS resources, the second threshold value, and the density of each CSI-RS resource. As an example, the network device compares the number N (or $N_{TRP}$) of CSI-RS resources with the second threshold value and determines whether the density of each CSI-RS resource is identical. If the number of CSI-RS resources is greater than the second threshold value and the densities of the N CSI-RS resources are different, or if the number of CSI-RS resources is greater than the second threshold value and the densities of the N CSI-RS resources are identical but greater than 0.5 RE/RB/port, the network device may execute the step 1103, that is, determining that the configured time-frequency pattern of the N CSI-RS resources is the second configured time-frequency pattern. That is, the N CSI-RS resources may be configured within the plurality of slots, such as configuring the N CSI-RS resources within two adjacent slots.

At 1103, it is determined that the configured time-frequency pattern of the N CSI-RS resources is a second configured time-frequency pattern.

Optionally, the network device may determine that the configured time-frequency pattern of the N CSI-RS resources is the second configured time-frequency pattern. That is, the N CSI-RS resources may be configured within the plurality of slots.

At 1104, the N CSI-RS resources are configured for the terminal according to the configured time-frequency pattern. The N CSI-RS resources are used by the network device to obtain N pieces of downlink channel information from the TRP to the terminal.

In the embodiments of the present disclosure, the step 1104 may be implemented in any of the ways of the step 804 in the embodiments of the present disclosure, which is not limited in the embodiments of the present disclosure and will not be repeated again.

By implementing this embodiment of the present disclosure, when the network device determines that the number of CSI-RS resources is greater than the second threshold value and the densities of the N CSI-RS resources are different, or that the number of CSI-RS resources is greater than the second threshold value and the densities of the N CSI-RS resources are identical but greater than 0.5 RE/RB/port, the N CSI-RS resources may be configured within the plurality of slots. By reasonably configuring all the CSI-RS resources, the impact on system performance may be reduced.

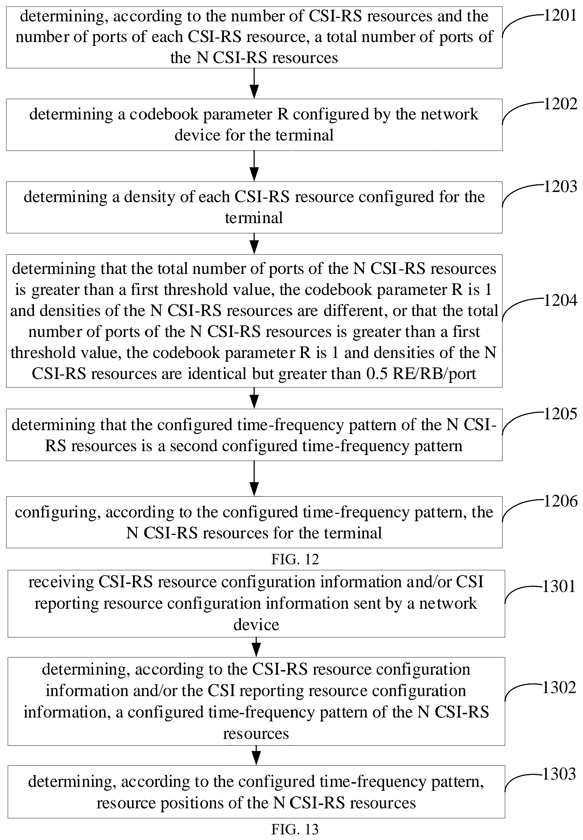

With reference to FIG. 12, it is a flowchart of another method for configuring CSI-RS resources according to an embodiment of the present disclosure. It needs to be noted that the method may be performed by a network device. As shown in FIG. 12, the method may include but is not limited to the following steps at 1201-1206.

At 1201, a total number of ports of the N CSI-RS resources is determined according to the number of ports of each CSI-RS resource among the N CSI-RS resources and the number of CSI-RS resources configured for the terminal.

In an embodiment of the present disclosure, each CSI-RS resource corresponds to one TRP for CJT, and N is an integer greater than 1.

In the embodiments of the present disclosure, the step 1201 may be implemented in any of the ways in the embodiments of the present disclosure, which is not limited in the embodiments of the present disclosure and will not be repeated again.

At 1202, a codebook parameter R configured by the network device for the terminal is determined.

In the embodiments of the present disclosure, the step 1202 may be implemented in any of the ways in the embodiments of the present disclosure, which is not limited in the embodiments of the present disclosure and will not be repeated again.

At 1203, the density of each CSI-RS resource configured for the terminal is determined.

In the embodiments of the present disclosure, step 1203 may be implemented in any of the ways in the embodiments of the present disclosure, which is not limited in the embodiments of the present disclosure and will not be repeated again.

At 1204, it is determined that the total number of ports of the N CSI-RS resources is greater than a first threshold value, the codebook parameter R is 1 and densities of the N CSI-RS resources are different, or that the total number of ports of the N CSI-RS resources is greater than a first threshold value, the codebook parameter R is 1 and densities of the N CSI-RS resources are identical but greater than 0.5 RE/RB/port.

In a possible implementation, the network device determines the configured time-frequency pattern of the N CSI-RS resources according to the total number $P_{tot}$ of ports of the N CSI-RS resources, the first threshold value, the codebook parameter R, and the density of each CSI-RS resource. As an example, the network device compares the total number $P_{tot}$ of ports of the N CSI-RS resources with the first threshold value, determines the value of the codebook parameter R and determines whether the density of each CSI-RS resource is identical. If the total number of ports of the N CSI-RS resources is greater than the first threshold value, the codebook parameter R is 1 and the densities of the N CSI-RS resources are different, or if the total number of ports of the N CSI-RS resources is greater than the first threshold value, the codebook parameter R is 1 and the densities of the N CSI-RS resources are identical but greater than 0.5 RE/RB/port, the network device may execute the step 1205, that is, determining that the configured time-frequency pattern of the N CSI-RS resources is the second configured time-frequency pattern. That is, the N CSI-RS resources may be configured within the plurality of slots, such as configuring the N CSI-RS resources within two adjacent slots.

At 1205, it is determined that the configured time-frequency pattern of the N CSI-RS resources is a second configured time-frequency pattern.

In the embodiments of the present disclosure, the step 1205 may be implemented in any of the ways in the embodiments of the present disclosure, which is not limited in the embodiments of the present disclosure and will not be repeated again.

At 1206, the N CSI-RS resources are configured for the terminal according to the configured time-frequency pattern. The N CSI-RS resources are used by the network device to obtain N pieces of downlink channel information from the TRP to the terminal.

In the embodiments of the present disclosure, the step 1206 may be implemented in any of the ways of the step 804 in the embodiments of the present disclosure, which is not limited in the embodiments of the present disclosure and will not be repeated again.

By implementing this embodiment of the present disclosure, when the network device determines that the total number of ports of the N CSI-RS resources is greater than the first threshold value, the codebook parameter R is 1 and the densities of the N CSI-RS resources are different, or that the total number of ports of the N CSI-RS resources is greater than the first threshold value, the codebook parameter R is 1 and the densities of the N CSI-RS resources are identical but greater than 0.5 RE/RB/port, the N CSI-RS resources may be configured within the plurality of slots. By rationally configuring all the CSI-RS resources, the impact on system performance may be reduced.

It may be understood that the above embodiment describes the implementation of the method for configuring CSI-RS resources in the embodiments of the present application from the network device side. The embodiments of the present disclosure further propose a method for configuring CSI-RS resources. The following describes an implementation of the method for configuring CSI-RS resources from the perspective of a terminal. With reference to FIG. 13, it is a flowchart of another method for configuring CSI-RS resources according to an embodiment of the present disclosure. It needs to be noted that the method may be performed by a terminal. As shown in FIG13 , the method may include but is not limited to the following steps at 1301-1303.

At 1301, CSI-RS resource configuration information and/or CSI reporting resource configuration information sent by a network device are received.

In this embodiment of the present disclosure, the CSI-RS resource configuration information includes a number of ports of each CSI-RS resource among N CSI-RS resources and/or a number of CSI-RS resources, each CSI-RS resource corresponds to a TRP, and the CSI-RS resource configuration information is used by the network device to obtain N pieces of downlink channel information from the TRP to the terminal, where N is an integer greater than 1.

The implementation in which the network device configures the N CSI-RS resources for the terminal may refer to the implementation of the method for configuring CSI-RS resources described from the network device side in the above embodiments, which will not be repeated here.

At 1302, a configured time-frequency pattern of the N CSI-RS resources is determined according to the CSI-RS resource configuration information and/or the CSI reporting resource configuration information.

In an implementation, the total number of ports of the N CSI-RS resources is determined according to the number of CSI-RS resources and the number of ports of each CSI-RS resource; it is determined that the total number of ports of the N CSI-RS resources is less than or equal to a first threshold value, and/or the number of CSI-RS resources is less than or equal to a second threshold value, in which the first threshold value is a threshold value of a total number of CSI-RS resource ports of the N CSI-RS resources in a single slot, and the second threshold value is a threshold value of a total number of CSI-RS resources of the N CSI-RS resources in a single slot; it is determined that the configured time-frequency pattern of the N CSI-RS resources is a first configured time-frequency pattern, in which the first configured time-frequency pattern indicates time-frequency domain resource mapping of the N CSI-RS resources within one slot.

In an implementation, the total number of ports of the N CSI-RS resources is determined according to the number of CSI-RS resources and the number of ports of each CSI-RS resource; a density of each CSI-RS resource configured by the network device for the terminal is determined; it is determined that the total number of ports of the N CSI-RS resources is greater than a first threshold value, the density of each CSI-RS resource is identical and the density is 0.5 RE/RB/port; and it is determined that the configured time-frequency pattern of the N CSI-RS resources is a first configured time-frequency pattern.

In an implementation, a density of each CSI-RS resource configured by the network device for the terminal is determined; it is determined that the number of CSI-RS resources is greater than a second threshold value, the density of each CSI-RS resource is identical and the density is 0.5 RE/RB/port; and it is determined that the configured time-frequency pattern of the N CSI-RS resources is a first configured time-frequency pattern.

In an implementation, the total number of ports of the N CSI-RS resources is determined according to the number of CSI-RS resources and the number of ports of each CSI-RS resource; the density of each CSI-RS resource configured by the network device for the terminal is determined; a codebook parameter R configured by the network device for the terminal is determined; it is determined that the total number of ports of the N CSI-RS resources is greater than a first threshold value, the codebook parameter R is 1, the density of each CSI-RS resource is identical and the density is 0.5 RE/RB/port; and it is determined that the configured time-frequency pattern of the N CSI-RS resources is a first configured time-frequency pattern.

In an implementation, the total number of ports of the N CSI-RS resources is determined according to the number of CSI-RS resources and the number of ports of each CSI-RS resource; it is determined that the total number of ports of the N CSI-RS resources is greater than a first threshold value and the number of CSI-RS resources is greater than a second threshold value; and it is determined that the configured time-frequency pattern of the N CSI-RS resources is a second configured time-frequency pattern, in which the second configured time-frequency pattern indicates time-frequency domain resource mapping of the N CSI-RS resources within a plurality of slots.

In an implementation, the total number of ports of the N CSI-RS resources is determined according to the number of CSI-RS resources and the number of ports of each CSI-RS resource; a density of each CSI-RS resource configured by the network device for the terminal is determined; it is determined that the total number of ports of the N CSI-RS resources is greater than a first threshold value and densities of the N CSI-RS resources are different, or that the total number of ports of the N CSI-RS resources is greater than the first threshold value and densities of the N CSI-RS resources are identical but greater than 0.5 RE/RB/port; and it is determined that the configured time-frequency pattern of the N CSI-RS resources is a second configured time-frequency pattern.

In an implementation, a density of each CSI-RS resource configured by the network device for the terminal is determined; it is determined that the number of CSI-RS resources is greater than a second threshold value and densities of the N CSI-RS resources are different, or that the number of CSI-RS resources is greater than a second threshold value and densities of the N CSI-RS resources are identical but greater than 0.5 RE/RB/port; and it is determined that the configured time-frequency pattern of the N CSI-RS resources is a second configured time-frequency pattern.

In an implementation, the total number of ports of the N CSI-RS resources is determined according to the number of CSI-RS resources and the number of ports of each CSI-RS resource; a codebook parameter R configured by the network device for the terminal is determined; a density of each CSI-RS resource configured by the network device for the terminal is determined; it is determined that the total number of ports of the N CSI-RS resources is greater than a first threshold value, the codebook parameter R is 1 and densities of the N CSI-RS resources are different, or that the total number of ports of the N CSI-RS resources is greater than the first threshold value, the codebook parameter R is 1 and densities of the N CSI-RS resources are identical but greater than 0.5 RE/RB/port; and it is determined that the configured time-frequency pattern of the N CSI-RS resources is a second configured time-frequency pattern.

It needs to be noted that the implementation of the step 1302 in the embodiments of the present disclosure may adopt the implementation of determining the configured time-frequency pattern of the N CSI-RS resources from the network device side described in the above embodiments, which will not be repeated here.

At 1303, resource positions of the N CSI-RS resources are determined according to the configured time-frequency pattern.

In this embodiment of the present disclosure, the terminal determines the configured time-frequency pattern of the N CSI-RS resources according to the number N of TRPs and/or the number of ports of each CSI-RS resource among the N CSI-RS resources configured by the network device, and determines the resource positions of the N CSI-RS resources according to the configured time-frequency pattern, so that the network device obtains N pieces of downlink channel information from the TRP to the terminal via the configured N CSI-RS resources, which achieves CJT of each TRP in the plurality of TRPs. In this configuration method, all the CSI-RS resources may be reasonably configured, which may reduce the impact on system performance.

In the above-mentioned embodiments according to the disclosure, the methods proposed in the disclosure are introduced from the perspectives of the network device and the terminal. In order to implement each function in the methods proposed in the above embodiments of the disclosure, the network device and the terminal may include hardware structures and software modules to implement the above functions in the form of the hardware structures, software modules, or hardware structures plus software modules. A certain function among the above functions may be executed in a hardware structure, a software module, or a hardware structure plus a software module.

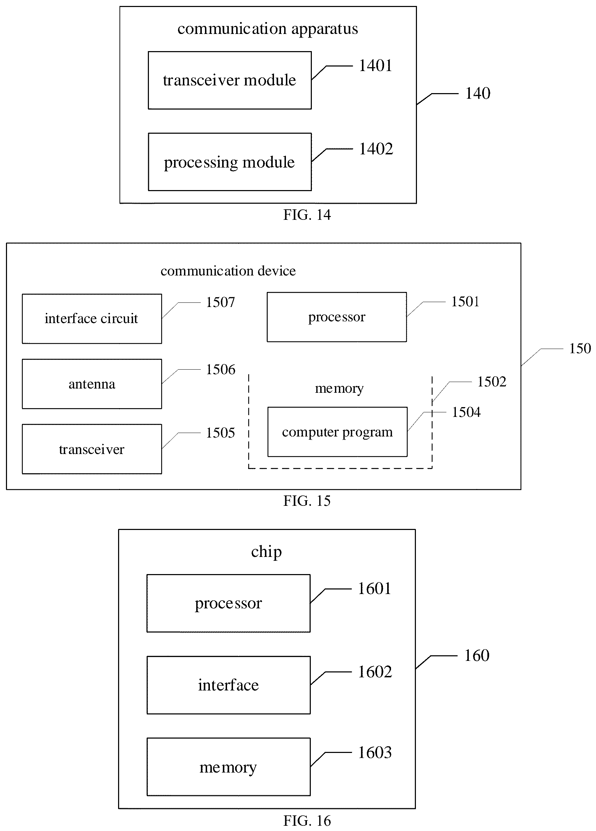

With reference to FIG. 14, it is a structural diagram of a communication apparatus 140 according to an embodiment of the present disclosure. The communication apparatus 140 shown in FIG. 14 may include a transceiver module 1401 and a processing module 1402. The transceiver module 1401 may include a sending module and/or a receiving module. The sending module is configured to implement a sending function, and the receiving module is configured to implement a receiving function. The transceiver module 1401 may implement a sending function and/or a receiving function.

The communication apparatus 140 may be a terminal, an apparatus in the terminal, or an apparatus that may be used in conjunction with the terminal. Alternatively, the communication an apparatus 140 may be a network device, an apparatus in the network device, or an apparatus that may be used in conjunction with the network device.

When the communication apparatus 140 is a network device, the processing module 1402 is configured to determine, according to a number of ports of each CSI-RS resource among N CSI-RS resources and/or a number of CSI-RS resources configured for a terminal, a configured time-frequency pattern of the N CSI-RS resources, in which each CSI-RS resource corresponds to a TRP for CJT, and N is an integer greater than 1; the processing module 1402 also configures, according to the configured time-frequency pattern, the N CSI-RS resources for the terminal. The N CSI-RS resources are used by the network device to obtain N pieces of downlink channel information from the TRP to the terminal.

In an implementation, the processing module 1402 is specifically configured to: determine, according to the number of CSI-RS resources and the number of ports of each CSI-RS resource configured for the terminal, a total number of ports of the N CSI-RS resources; determine that the total number of ports of the N CSI-RS resources is less than or equal to a first threshold value, and/or that the number of CSI-RS resources is less than or equal to a second threshold value, in which the first threshold value is a threshold value of a total number of CSI-RS resource ports of the N CSI-RS resources in a single slot, and the second threshold value is a threshold value of a total number of CSI-RS resources of the N CSI-RS resources in the single slot; and determine that the configured time-frequency pattern of the N CSI-RS resources is a first configured time-frequency pattern, in which the first configured time-frequency pattern indicates time-frequency domain resource mapping of the N CSI-RS resources within one slot.

In a possible implementation, the processing module 1402 is specifically configured to: determine a subband size configured for the terminal; determine a density of each CSI-RS resource configured for the terminal, in which the density of each CSI-RS resource is identical or different; and configure the N CSI-RS resources within one slot by using a first configured time-frequency pattern according to the subband size, the density of each CSI-RS resource, and the number of ports of each CSI-RS resource.

In a possible implementation, the processing module 1402 is specifically configured to: determine a subband size configured for the terminal; determine a density of each CSI-RS resource configured for the terminal, in which the density of each CSI-RS resource is identical and the density is 0.5 RE/RB/port; determine a number of PRBs configured for the terminal; and configure the N CSI-RS resources within one slot by using the first configured time-frequency pattern according to a PRB resource index, the subband size, the density of each CSI-RS resource, and the number of ports of each CSI-RS resource.

In an implementation, the processing module 1402 is specifically configured to: determine, according to the number of CSI-RS resources and the number of ports of each CSI-RS resource configured for the terminal, a total number of ports of the N CSI-RS resources; determine a density of each CSI-RS resource configured for the terminal; determine that the total number of ports of the N CSI-RS resources is greater than a first threshold value, the density of each CSI-RS resource is identical and the density is 0.5 RE/RB/port; and determine that the configured time-frequency pattern of the N CSI-RS resources is a first configured time-frequency pattern.

In an implementation, the processing module 1402 is specifically configured to: determine a density of each CSI-RS resource configured for the terminal; determine that the number of CSI-RS resources is greater than a second threshold value, the density of each CSI-RS resource is identical and the density is 0.5 RE/RB/port; and determine that the configured time-frequency pattern of the N CSI-RS resources is a first configured time-frequency pattern.

In an implementation, the processing module 1402 is specifically configured to: determine, according to the number of CSI-RS resources and the number of ports of each CSI-RS resource, a total number of ports of the N CSI-RS resources; determine a density of each CSI-RS resource configured for the terminal; determine a codebook parameter R configured by the network device for the terminal; determine that the total number of ports of the N CSI-RS resources is greater than a first threshold value, and the codebook parameter R is 1, the density of each CSI-RS resource is identical and the density is 0.5 RE/RB/port; and determine that the configured time-frequency pattern of the N CSI-RS resources is a first configured time-frequency pattern.

In a possible implementation, the processing module 1402 is specifically configured to: determine a subband size configured for the terminal; and configure the N CSI-RS resources within one slot by using the first configured time-frequency pattern according to the subband size, the density of each CSI-RS resource, and the number of ports of each CSI-RS resource.

In a possible implementation, the processing module 1402 is specifically configured to: determine a subband size configured for the terminal; determine a number of PRBs configured for the terminal; and configure the N CSI-RS resources within one slot by using the first configured time-frequency pattern according to a PRB resource index, the subband size, the density of each CSI-RS resource, and the number of ports of each CSI-RS resource.

In a possible implementation, the processing module 1402 is specifically configured to: configure a first CSI-RS resource among the N CSI-RS resources at an odd-numbered position of the PRB resource index, and configure a second CSI-RS resource among the N CSI-RS resources at an even-numbered position of the PRB resource index by using the first configured time-frequency pattern according to the subband size, the density of each CSI-RS resource, and the number of ports of each CSI-RS resource.

In an implementation, the processing module 1402 is specifically configured to: determine a total number of ports of the N CSI-RS resources according to the number of CSI-RS resources and the number of ports of each CSI-RS resource; determine that the total number of ports of the N CSI-RS resources is greater than a first threshold value and the number of CSI-RS resources is greater than a second threshold value; determine that the configured time-frequency pattern of the N CSI-RS resources is a second configured time-frequency pattern, in which the second configured time-frequency pattern indicates time-frequency domain resource mapping of the N CSI-RS resources within a plurality of slots.

In a possible implementation, the processing module 1402 is specifically configured to: determine a subband size configured for the terminal; determine a density of each CSI-RS resource configured for the terminal; and configure the N CSI-RS resources within the plurality of slots by using the second configured time-frequency pattern, according to the subband size, the density of each CSI-RS resource, and the number of ports of each CSI-RS resource.

In a possible implementation, the processing module 1402 is specifically configured to: configure a first CSI-RS resource among the N CSI-RS resources within a first slot; and configure a second CSI-RS resource among the N CSI-RS resources within a second slot, in which a time interval between the first slot and the second slot is less than or equal to X slots, where X is a positive integer.

In a possible implementation, a number of CSI-RS resources included in the first CSI-RS resource is $N_1$, and a calculation formula of $N_1$ is expressed as follows: $N_1 = \left\lceil \frac{N}{2} \right\rceil$ or $\left\lfloor \frac{N}{2} \right\rfloor$, where $\lceil \ \rceil$ is a rounded-up function, $\lfloor \ \rfloor$ is a rounded-down function, and N is the number of CSI-RS resources; and a number of CSI-RS resources included in the second CSI-RS resource is $N-N_1$.

Optionally, a density of the first CSI-RS resource is identical with a density of the second CSI-RS resource; or a density of the first CSI-RS resource is different from a density of the second CSI-RS resource.

Optionally, a time-frequency resource position of the first CSI-RS resource is identical with a time-frequency resource position of the second CSI-RS resource; or a time-frequency resource position of the first CSI-RS resource is different from a time-frequency resource position of the second CSI-RS resource; or time-frequency resource positions of a part of CSI-RS resources in the first CSI-RS resource are identical with time-frequency resource positions of a part of CSI-RS resources in the second CSI-RS resource; or time-frequency resource positions of a part of CSI-RS resources in the first CSI-RS resource are different from time-frequency resource positions of a part of CSI-RS resources in the second CSI-RS resource.

In an optional implementation, the processing module 1402 is specifically configured to: determine that a number of CSI-RS resources included in the first CSI-RS resource is greater than or equal to 2; and configure the CSI-RS resources included in the first CSI-RS resource within the first slot, in which densities of the CSI-RS resources included in the first CSI-RS resource are identical or different.

In an optional implementation, the processing module 1402 is specifically configured to: determine that a number of CSI-RS resources included in the first CSI-RS resource is greater than or equal to 2; determine densities of the CSI-RS resources included in the first CSI-RS resource configured for the terminal, in which the densities of the CSI-RS resources included in the first CSI-RS resource are identical, and the densities are 0.5 RE/RB/port; and configure the first CSI-RS resource within the first slot according to a PRB resource index and the densities of the CSI-RS resources included in the first CSI-RS resource.

In an optional implementation, the processing module 1402 is specifically configured to: determine that a number of CSI-RS resources included in the second CSI-RS resource is greater than or equal to 2; and configure the CSI-RS resources included in the second CSI-RS resource within the second slot, in which densities of the CSI-RS resources included in the second CSI-RS resource are identical or different.

In an optional implementation, the processing module 1402 is specifically configured to: determine that a number of CSI-RS resources included in the second CSI-RS resource is greater than or equal to 2; determine densities of the CSI-RS resources included in the second CSI-RS resource configured for the terminal, in which the densities of the CSI-RS resources included in the second CSI-RS resource are identical, and the densities are 0.5 RE/RB/port; and configure the second CSI-RS resource within the second slot according to a PRB resource index and the densities of the CSI-RS resources included in the second CSI-RS resource.

In an optional implementation, the processing module 1402 is specifically configured to: determine a total number of ports of the N CSI-RS resources according to the number of CSI-RS resources and the number of ports of each CSI-RS resource; determine a density of each CSI-RS resource configured for the terminal; determine that the total number of ports of the N CSI-RS resources is greater than a first threshold value and densities of the N CSI-RS resources are different, or that the total number of ports of the N CSI-RS resources is greater than a first threshold value and densities of the N CSI-RS resources are identical but greater than 0.5 RE/RB/port; and determine that the configured time-frequency pattern of the N CSI-RS resources is a second configured time-frequency pattern.

In an implementation, the processing module 1402 is specifically configured to: determine a density of each CSI-RS resource configured for the terminal; determine that the number of CSI-RS resources is greater than a second threshold value and densities of the N CSI-RS resources are different, or that the number of CSI-RS resources is greater than a second threshold value and densities of the N CSI-RS resources are identical but greater than 0.5 RE/RB/port; and determine that the configured time-frequency pattern of the N CSI-RS resources is a second configured time-frequency pattern.

In an implementation, the processing module 1402 is specifically configured to: determine a total number of ports of the N CSI-RS resources according to the number of CSI-RS resources and the number of ports of each CSI-RS resource; determine a codebook parameter R configured by the network device for the terminal; determine a density of each CSI-RS resource configured for the terminal; determine that the total number of ports of the N CSI-RS resources is greater than a first threshold value and the codebook parameter R is 1 and the densities of the N CSI-RS resources are different, or that the total number of ports of the N CSI-RS resources is greater than the first threshold value, the codebook parameter R is 1 and densities of the N CSI-RS resources are identical but greater than 0.5 RE/RB/port; and determine that the configured time-frequency pattern of the N CSI-RS resources is a second configured time-frequency pattern.

In an implementation, the processing module 1402 is specifically configured to: determine a subband size configured for the terminal; and configure the N CSI-RS resources within a plurality of slots by using the second configured time-frequency pattern according to the subband size, the density of each CSI-RS resource, and the number of ports of each CSI-RS resource.

When the communication apparatus 140 is a terminal, the transceiver module 1401 is configured to receive CSI-RS resource configuration information and/or CSI reporting resource configuration information sent by a network device, in which the CSI-RS resource configuration information includes a number of ports of each CSI-RS resource and/or a number of CSI-RS resources among N CSI-RS resources, each CSI-RS resource corresponds to a TRP for CJT, and N is an integer greater than 1; the processing module 1402 is configured to determine a configured time-frequency pattern of the N CSI-RS resources according to the CSI-RS resource configuration information and/or the CSI reporting resource configuration information; the processing module 1402 is configured to determine resource positions of the N CSI-RS resources according to the configured time-frequency pattern.

In an implementation, the processing module 1402 is specifically configured to: determine a total number of ports of the N CSI-RS resources according to the number of CSI-RS resources and the number of ports of each CSI-RS resource; determine that the total number of ports of the N CSI-RS resources is less than or equal to a first threshold value, and/or the number of CSI-RS resources is less than or equal to a second threshold value, in which the first threshold value is a threshold value of a total number of CSI-RS resource ports of the N CSI-RS resources in a single slot, and the second threshold value is a threshold value of a total number of CSI-RS resources of the N CSI-RS resources in the single slot; and determine that the configured time-frequency pattern of the N CSI-RS resources is a first configured time-frequency pattern, in which the first configured time-frequency pattern indicates time-frequency domain resource mapping of the N CSI-RS resources within one slot.

In an implementation, the processing module 1402 is specifically configured to: determine a total number of ports of the N CSI-RS resources according to the number of CSI-RS resources and the number of ports of each CSI-RS resource; determine a density of each CSI-RS resource configured by the network device for the terminal; determine that the total number of ports of the N CSI-RS resources is greater than a first threshold value, the density of each CSI-RS resource is identical and the density is 0.5 RE/RB/port; and determine that the configured time-frequency pattern of the N CSI-RS resources is a first configured time-frequency pattern.

In an implementation, the processing module 1402 is specifically configured to: determine a density of each CSI-RS resource configured by the network device for the terminal; determine that the number of CSI-RS resources is greater than a second threshold value, the density of each CSI-RS resource is identical and the density is 0.5 RE/RB/port; and determine that the configured time-frequency pattern of the N CSI-RS resources is a first configured time-frequency pattern.

In an implementation, the processing module 1402 is specifically configured to: determine a total number of ports of the N CSI-RS resources according to the number of CSI-RS resources and the number of ports of each CSI-RS resource; determine a density of each CSI-RS resource configured by the network device for the terminal; determine a codebook parameter R configured by the network device for the terminal; determine that the total number of ports of the N CSI-RS resources is greater than a first threshold value, the codebook parameter R is 1, and the density of each CSI-RS resource is identical and the density is 0.5 RE/RB/port; and determine that the configured time-frequency pattern of the N CSI-RS resources is a first configured time-frequency pattern.

In an implementation, the processing module 1402 is specifically configured to: determine a total number of ports of the N CSI-RS resources according to the number of CSI-RS resources and the number of ports of each CSI-RS resource; determine that the total number of ports of the N CSI-RS resources is greater than a first threshold value and the number of CSI-RS resources is greater than a second threshold value; determine that the configured time-frequency pattern of the N CSI-RS resources is a second configured time-frequency pattern, in which the second configured time-frequency pattern indicates time-frequency domain resource mapping of the N CSI-RS resources within a plurality of slots.

In an implementation, the processing module 1402 is specifically configured to: determine a total number of ports of the N CSI-RS resources according to the number of CSI-RS resources and the number of ports of each CSI-RS resource; determine a density of each CSI-RS resource configured by the network device for the terminal; determine that the total number of ports of the N CSI-RS resources is greater than a first threshold value and densities of the N CSI-RS resources are different, or that the total number of ports of the N CSI-RS resources is greater than a first threshold value and densities of the N CSI-RS resources are identical but greater than 0.5 RE/RB/port; and determine that the configured time-frequency pattern of the N CSI-RS resources is a second configured time-frequency pattern.

In an implementation, the processing module 1402 is specifically configured to: determine a density of each CSI-RS resource configured by the network device for the terminal; determine that the number of CSI-RS resources is greater than a second threshold value and densities of the N CSI-RS resources are different, or that the number of CSI-RS resources is greater than a second threshold value and densities of the N CSI-RS resources are identical but greater than 0.5 RE/RB/port; and determine that the configured time-frequency pattern of the N CSI-RS resources is a second configured time-frequency pattern.

In an implementation, the processing module 1402 is specifically configured to: determine a total number of ports of the N CSI-RS resources according to the number of CSI-RS resources and the number of ports of each CSI-RS resource; determine a codebook parameter R configured by the network device for the terminal; determine a density of each CSI-RS resource configured by the network device for the terminal; determine that the total number of ports of the N CSI-RS resources is greater than a first threshold value, the codebook parameter R is 1 and densities of the N CSI-RS resources are different, or that the total number of ports of the N CSI-RS resources is greater than a first threshold value, the codebook parameter R is 1 and densities of the N CSI-RS resources are identical but greater than 0.5 RE/RB/port; and determine that the configured time-frequency pattern of the N CSI-RS resources is a second configured time-frequency pattern.

Regarding the apparatus in the above embodiments, the specific implementation in which each module performs operations has been described in detail in the method embodiments, which will not be repeated here.

With reference to FIG. 15, it is a structural diagram of another communication device 150 according to an embodiment of the present disclosure. The communication device 150 may be a network device, a terminal, a chip, a chip system, or a processor that supports the network device to implement the above method, or a chip, a chip system, or a processor that supports the terminal to implement the above method. The device may be used to implement the method described in the above method embodiments. For details, reference may be made to the description in the above method embodiments.

The communication device 150 may include one or more processors 1501. The processor 1501 may be a general-purpose processor or a dedicated processor. For example, it may be a baseband processor or a central processing unit. The baseband processor may be used to process communication protocols and communication data, and the central processing unit may be used to control communication devices (such as a base station, a baseband chip, a terminal, a terminal device chip, a DU or a CU, etc.), execute computer programs, and process data of the computer programs.

Optionally, the communication device 150 may further include one or more memories 1502, on which a computer program 1504 may be stored. When the computer program 1504 is executed by the processor 1501, the communication device 150 is caused to perform the method described in the above method embodiments. Optionally, data may also be stored in the memory 1502. The communication device 150 and the memory 1502 may be provided separately or integrated together.

Optionally, the communication device 150 may further include a transceiver 1505 and an antenna 1506. The transceiver 1505 may be referred to as a transceiver unit, a transceiving machine, or a transceiver circuit, etc., and is used to implement transceiver functions. The transceiver 1505 may include a receiver and a transmitter. The receiver may be referred to as a receiving machine or a receiving circuit, etc., and is used to implement a receiving function. The transmitter may be referred to as a transmitting machine or a transmitting circuit, etc., and is used to implement the transmitting function.

Optionally, the communication device 150 may further include one or more interface circuits 1507. The interface circuit 1507 is used to receive code instructions and transmit them to the processor 1501. When the code instructions are executed by the processor 1501, the communication device 150 is caused to perform the method described in the above method embodiments.

When the communication device 150 is the network device, the processor 1501 is used to execute: the steps 201 and 202 in FIG. 2; the steps 301, 302, 303 and 304 in FIG. 3; the steps 501, 502, 503, 504 and 505 in FIG. 5; the steps 601, 602, 603 and 604 in FIG. 6; the steps 701, 702, 703, 704, 705 and 706 in FIG. 7; the steps 801, 802, 803, and 804 in FIG. 8; the steps 1001, 1002, 1003, 1004, and 1005 in FIG. 10; the steps 1101, 1102, 1103, and 1104 in FIG. 11; or the steps 1201, 1202, 1203, 1204, 1205, and 1206 in FIG. 12.

When the communication device 150 is the terminal, the transceiver 1505 is used to execute the step 1301 in FIG. 13. The processor 1501 is configured to execute the steps 1302 and 1303 in FIG. 13.

In an implementation, the processor 1501 may include a transceiver for implementing receiving and transmitting functions. For example, the transceiver may be a transceiver circuit, or an interface, or an interface circuit. The transceiver circuit, interface or interface circuit used to implement the receiving and transmitting functions may be separate or integrated. The above-mentioned transceiver circuit, interface or interface circuit may be used for reading and writing codes/data, or the above-mentioned transceiver circuit, interface or interface circuit may be used for transmitting or delivering signals.

In an implementation, the processor 1501 may store a computer program, and the computer program is running on the processor 1501, the communication device 150 may be caused to perform the method described in the above method embodiments. The computer program may be embedded/solidified in the processor 1501. In this case, the processor 1501 may be implemented by hardware.

In an implementation, the communication device 150 may include a circuit, which may implement the functions of sending, receiving, or communicating in the aforementioned method embodiments. The processor and transceiver described in the present disclosure may be implemented on an integrated circuit (IC), an analog IC, a radio frequency integrated circuit RFIC, a mixed signal IC, an application specific integrated circuit (ASIC), a printed circuit board (PCB), an electronic device, etc. The processor and transceiver may also be manufactured using various IC process technologies, such as a complementary metal oxide semiconductor (CMOS), a nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be a network device or a terminal, but the scope of the communication device described in the present disclosure is not limited herein, and the structure of the communication device may not be limited to FIG. 15. The communication device may be a stand-alone device or may be part of a larger device. For example, the communication device may be:

(1) an independent integrated circuit IC, or a chip, or a chip system or a subsystem;
(2) a collection of one or more ICs. Optionally, the IC collection may also include storage components for storing data and computer programs;
(3) ASIC, such as modem;
(4) modules that may be embedded in other devices;
(5) a receiver, a terminal device, an intelligent terminal device, a cellular phone, a wireless device, a handheld device, a mobile unit, a vehicle-mounted device, a network device, a cloud device, an artificial intelligence device, etc.;
(6) Others, etc.

For the case where the communication device may be a chip or a chip system, reference may be made to the structural diagram of the chip shown in FIG. 16. The chip shown in FIG. 16 includes a processor 1601 and an interface 1602. There may be one or more processors 1601, and there may be a plurality of interfaces 1602.

In the case where the chip is used to implement the functions of the network device in the embodiments of the present disclosure, the processor 1601 is configured to determine, according to a number of ports of each CSI-RS resource among N CSI-RS resources and/or a number of CSI-RS resources configured for a terminal, a configured time-frequency pattern of the N CSI-RS resources, in which each CSI-RS resource corresponds to a TRP for CJT, and N is an integer greater than 1; the processor 1601 also configures, according to the configured time-frequency pattern, the N CSI-RS resources for the terminal. The N CSI-RS resources are used by the network device to obtain N pieces of downlink channel information from the TRP to the terminal.

In an implementation, the processor 1601 is specifically configured to: determine, according to the number of CSI-RS resources and the number of ports of each CSI-RS resource configured for the terminal, a total number of ports of the N CSI-RS resources; determine that the total number of ports of the N CSI-RS resources is less than or equal to a first threshold value, and/or that the number of CSI-RS resources is less than or equal to a second threshold value, in which the first threshold value is a threshold value of a total number of CSI-RS resource ports of the N CSI-RS resources in a single slot, and the second threshold value is a threshold value of a total number of CSI-RS resources of the N CSI-RS resources in the single slot; and determine that the configured time-frequency pattern of the N CSI-RS resources is a first configured time-frequency pattern, in which the first configured time-frequency pattern indicates time-frequency domain resource mapping of the N CSI-RS resources within one slot.

In a possible implementation, the processor 1601 is specifically configured to: determine a subband size configured for the terminal; determine a density of each CSI-RS resource configured for the terminal, in which the density of each CSI-RS resource is identical or different; and configure the N CSI-RS resources within one slot by using a first configured time-frequency pattern according to the subband size, the density of each CSI-RS resource, and the number of ports of each CSI-RS resource.

In a possible implementation, the processor 1601 is specifically configured to: determine a subband size configured for the terminal; determine a density of each CSI-RS resource configured for the terminal, in which the density of each CSI-RS resource is identical and the density is 0.5 RE/RB/port; determine a number of PRBs configured for the terminal; and configure the N CSI-RS resources within one slot by using the first configured time-frequency pattern according to a PRB resource index, the subband size, the density of each CSI-RS resource, and the number of ports of each CSI-RS resource.

In an implementation, the processor 1601 is specifically configured to: determine, according to the number of CSI-RS resources and the number of ports of each CSI-RS resource configured for the terminal, a total number of ports of the N CSI-RS resources; determine a density of each CSI-RS resource configured for the terminal; determine that the total number of ports of the N CSI-RS resources is greater than a first threshold value, the density of each CSI-RS resource is identical and the density is 0.5 RE/RB/port; and determine that the configured time-frequency pattern of the N CSI-RS resources is a first configured time-frequency pattern.

In an implementation, the processor 1601 is specifically configured to: determine a density of each CSI-RS resource configured for the terminal; determine that the number of CSI-RS resources is greater than a second threshold value, the density of each CSI-RS resource is identical and the density is 0.5 RE/RB/port; and determine that the configured time-frequency pattern of the N CSI-RS resources is a first configured time-frequency pattern.

In an implementation, the processor 1601 is specifically configured to: determine, according to the number of CSI-RS resources and the number of ports of each CSI-RS resource, a total number of ports of the N CSI-RS resources; determine a density of each CSI-RS resource configured for the terminal; determine a codebook parameter R configured by the network device for the terminal; determine that the total number of ports of the N CSI-RS resources is greater than a first threshold value, and the codebook parameter R is 1, the density of each CSI-RS resource is identical and the density is 0.5 RE/RB/port; and determine that the configured time-frequency pattern of the N CSI-RS resources is a first configured time-frequency pattern.

In a possible implementation, the processor 1601 is specifically configured to: determine a subband size configured for the terminal; and configure the N CSI-RS resources within one slot by using the first configured time-frequency pattern according to the subband size, the density of each CSI-RS resource, and the number of ports of each CSI-RS resource.

In a possible implementation, the processor 1601 is specifically configured to: determine a subband size configured for the terminal; determine a number of PRBs configured for the terminal; and configure the N CSI-RS resources within one slot by using the first configured time-frequency pattern according to a PRB resource index, the subband size, the density of each CSI-RS resource, and the number of ports of each CSI-RS resource.

In a possible implementation, the processor 1601 is specifically configured to: configure a first CSI-RS resource among the N CSI-RS resources at an odd-numbered position of the PRB resource index, and configure a second CSI-RS resource among the N CSI-RS resources at an even-numbered position of the PRB resource index by using the first configured time-frequency pattern according to the subband size, the density of each CSI-RS resource, and the number of ports of each CSI-RS resource.

In an implementation, the processor 1601 is specifically configured to: determine a total number of ports of the N CSI-RS resources according to the number of CSI-RS resources and the number of ports of each CSI-RS resource; determine that the total number of ports of the N CSI-RS resources is greater than a first threshold value and the number of CSI-RS resources is greater than a second threshold value; determine that the configured time-frequency pattern of the N CSI-RS resources is a second configured time-frequency pattern, in which the second configured time-frequency pattern indicates time-frequency domain resource mapping of the N CSI-RS resources within a plurality of slots.

In a possible implementation, the processor 1601 is specifically configured to: determine a subband size configured for the terminal; determine a density of each CSI-RS resource configured for the terminal; and configure the N CSI-RS resources within the plurality of slots by using the second configured time-frequency pattern, according to the subband size, the density of each CSI-RS resource, and the number of ports of each CSI-RS resource.

In a possible implementation, the processor 1601 is specifically configured to: configure a first CSI-RS resource among the N CSI-RS resources within a first slot; and configure a second CSI-RS resource among the N CSI-RS resources within a second slot, in which a time interval between the first slot and the second slot is less than or equal to X slots, where X is a positive integer.

In a possible implementation, a number of CSI-RS resources included in the first CSI-RS resource is $N_1$, and a calculation formula of $N_1$ is expressed as follows: $N_1 = \left\lceil \frac{N}{2} \right\rceil$ or $\left\lfloor \frac{N}{2} \right\rfloor$, where $\lceil \rceil$ is a rounded-up function, $\lfloor \rfloor$ is a rounded-down function, and N is the number of CSI-RS resources; and a number of CSI-RS resources included in the second CSI-RS resource is N-$N_1$.

Optionally, a density of the first CSI-RS resource is identical with a density of the second CSI-RS resource; or a density of the first CSI-RS resource is different from a density of the second CSI-RS resource.

Optionally, a time-frequency resource position of the first CSI-RS resource is identical with a time-frequency resource position of the second CSI-RS resource; or a time-frequency resource position of the first CSI-RS resource is different from a time-frequency resource position of the second CSI-RS resource; or time-frequency resource positions of a part of CSI-RS resources in the first CSI-RS resource are identical with time-frequency resource positions of a part of CSI-RS resources in the second CSI-RS resource; or time-frequency resource positions of a part of CSI-RS resources in the first CSI-RS resource are different from time-frequency resource positions of a part of CSI-RS resources in the second CSI-RS resource.

In an optional implementation, the processor 1601 is specifically configured to: determine that a number of CSI-RS resources included in the first CSI-RS resource is greater than or equal to 2; and configure the CSI-RS resources included in the first CSI-RS resource within the first slot, in which densities of the CSI-RS resources included in the first CSI-RS resource are identical or different.

In an optional implementation, the processor 1601 is specifically configured to: determine that a number of CSI-RS resources included in the first CSI-RS resource is greater than or equal to 2; determine densities of the CSI-RS resources included in the first CSI-RS resource configured for the terminal, in which the densities of the CSI-RS resources included in the first CSI-RS resource are identical, and the densities are 0.5 RE/RB/port; and configure the first CSI-RS resource within the first slot according to a PRB resource index and the densities of the CSI-RS resources included in the first CSI-RS resource.

In an optional implementation, the processor 1601 is specifically configured to: determine that a number of CSI-RS resources included in the second CSI-RS resource is greater than or equal to 2; and configure the CSI-RS resources included in the second CSI-RS resource within the second slot, in which densities of the CSI-RS resources included in the second CSI-RS resource are identical or different.

In an optional implementation, the processor 1601 is specifically configured to: determine that a number of CSI-RS resources included in the second CSI-RS resource is greater than or equal to 2; determine densities of the CSI-RS resources included in the second CSI-RS resource configured for the terminal, in which the densities of the CSI-RS resources included in the second CSI-RS resource are identical, and the densities are 0.5 RE/RB/port; and configure the second CSI-RS resource within the second slot according to a PRB resource index and the densities of the CSI-RS resources included in the second CSI-RS resource.

In an optional implementation, the processor 1601 is specifically configured to: determine a total number of ports of the N CSI-RS resources according to the number of CSI-RS resources and the number of ports of each CSI-RS resource; determine a density of each CSI-RS resource configured for the terminal; determine that the total number of ports of the N CSI-RS resources is greater than a first threshold value and densities of the N CSI-RS resources are different, or that the total number of ports of the N CSI-RS resources is greater than a first threshold value and densities of the N CSI-RS resources are identical but greater than 0.5 RE/RB/port; and determine that the configured time-frequency pattern of the N CSI-RS resources is a second configured time-frequency pattern.

In an implementation, the processor 1601 is specifically configured to: determine a density of each CSI-RS resource configured for the terminal; determine that the number of CSI-RS resources is greater than a second threshold value and densities of the N CSI-RS resources are different, or that the number of CSI-RS resources is greater than a second threshold value and densities of the N CSI-RS resources are identical but greater than 0.5 RE/RB/port; and determine that the configured time-frequency pattern of the N CSI-RS resources is a second configured time-frequency pattern.

In an implementation, the processor 1601 is specifically configured to: determine a total number of ports of the N CSI-RS resources according to the number of CSI-RS resources and the number of ports of each CSI-RS resource; determine a codebook parameter R configured by the network device for the terminal; determine a density of each CSI-RS resource configured for the terminal; determine that the total number of ports of the N CSI-RS resources is greater than a first threshold value and the codebook parameter R is 1 and the densities of the N CSI-RS resources are different, or that the total number of ports of the N CSI-RS resources is greater than the first threshold value, the codebook parameter R is 1 and densities of the N CSI-RS resources are identical but greater than 0.5 RE/RB/port; and determine that the configured time-frequency pattern of the N CSI-RS resources is a second configured time-frequency pattern.

In an implementation, the processor 1601 is specifically configured to: determine a subband size configured for the terminal; and configure the N CSI-RS resources within a plurality of slots by using the second configured time-frequency pattern according to the subband size, the density of each CSI-RS resource, and the number of ports of each CSI-RS resource.

In the case where the chip is used to implement the functions of the terminal in the embodiments of the present disclosure, the interface 1602 is configured to receive CSI-RS resource configuration information and/or CSI reporting resource configuration information sent by a network device, in which the CSI-RS resource configuration information includes a number of ports of each CSI-RS resource and/or a number of CSI-RS resources among N CSI-RS resources, each CSI-RS resource corresponds to a TRP for CJT, and N is an integer greater than 1; the processor 1601 is configured to determine a configured time-frequency pattern of the N CSI-RS resources according to the CSI-RS resource configuration information and/or the CSI reporting resource configuration information; the processor 1601 is configured to determine resource positions of the N CSI-RS resources according to the configured time-frequency pattern.

In an implementation, the processor 1601 is specifically configured to: determine a total number of ports of the N CSI-RS resources according to the number of CSI-RS resources and the number of ports of each CSI-RS resource; determine that the total number of ports of the N CSI-RS resources is less than or equal to a first threshold value, and/or the number of CSI-RS resources is less than or equal to a second threshold value, in which the first threshold value is a threshold value of a total number of CSI-RS resource ports of the N CSI-RS resources in a single slot, and the second threshold value is a threshold value of a total number of CSI-RS resources of the N CSI-RS resources in the single slot; and determine that the configured time-frequency pattern of the N CSI-RS resources is a first configured time-frequency pattern, in which the first configured time-frequency pattern indicates time-frequency domain resource mapping of the N CSI-RS resources within one slot.

In an implementation, the processor 1601 is specifically configured to: determine a total number of ports of the N CSI-RS resources according to the number of CSI-RS resources and the number of ports of each CSI-RS resource; determine a density of each CSI-RS resource configured by the network device for the terminal; determine that the total number of ports of the N CSI-RS resources is greater than a first threshold value, the density of each CSI-RS resource is identical and the density is 0.5 RE/RB/port; and determine that the configured time-frequency pattern of the N CSI-RS resources is a first configured time-frequency pattern.

In an implementation, the processor 1601 is specifically configured to: determine a density of each CSI-RS resource configured by the network device for the terminal; determine that the number of CSI-RS resources is greater than a second threshold value, the density of each CSI-RS resource is identical and the density is 0.5 RE/RB/port; and determine that the configured time-frequency pattern of the N CSI-RS resources is a first configured time-frequency pattern.

In an implementation, the processor 1601 is specifically configured to: determine a total number of ports of the N CSI-RS resources according to the number of CSI-RS resources and the number of ports of each CSI-RS resource; determine a density of each CSI-RS resource configured by the network device for the terminal; determine a codebook parameter R configured by the network device for the terminal; determine that the total number of ports of the N CSI-RS resources is greater than a first threshold value, the codebook parameter R is 1, and the density of each CSI-RS resource is identical and the density is 0.5 RE/RB/port; and determine that the configured time-frequency pattern of the N CSI-RS resources is a first configured time-frequency pattern.

In an implementation, the processor 1601 is specifically configured to: determine a total number of ports of the N CSI-RS resources according to the number of CSI-RS resources and the number of ports of each CSI-RS resource; determine that the total number of ports of the N CSI-RS resources is greater than a first threshold value and the number of CSI-RS resources is greater than a second threshold value; determine that the configured time-frequency pattern of the N CSI-RS resources is a second configured time-frequency pattern, in which the second configured time-frequency pattern indicates time-frequency domain resource mapping of the N CSI-RS resources within a plurality of slots.

In an implementation, the processor 1601 is specifically configured to: determine a total number of ports of the N CSI-RS resources according to the number of CSI-RS resources and the number of ports of each CSI-RS resource; determine a density of each CSI-RS resource configured by the network device for the terminal; determine that the total number of ports of the N CSI-RS resources is greater than a first threshold value and densities of the N CSI-RS resources are different, or that the total number of ports of the N CSI-RS resources is greater than a first threshold value and densities of the N CSI-RS resources are identical but greater than 0.5 RE/RB/port; and determine that the configured time-frequency pattern of the N CSI-RS resources is a second configured time-frequency pattern.

In an implementation, the processor 1601 is specifically configured to: determine a density of each CSI-RS resource configured by the network device for the terminal; determine that the number of CSI-RS resources is greater than a second threshold value and densities of the N CSI-RS resources are different, or that the number of CSI-RS resources is greater than a second threshold value and densities of the N CSI-RS resources are identical but greater than 0.5 RE/RB/port; and determine that the configured time-frequency pattern of the N CSI-RS resources is a second configured time-frequency pattern.

In an implementation, the processing module 1402 is specifically configured to: determine a total number of ports of the N CSI-RS resources according to the number of CSI-RS resources and the number of ports of each CSI-RS resource; determine a codebook parameter R configured by the network device for the terminal; determine a density of each CSI-RS resource configured by the network device for the terminal; determine that the total number of ports of the N CSI-RS resources is greater than a first threshold value, the codebook parameter R is 1 and densities of the N CSI-RS resources are different, or that the total number of ports of the N CSI-RS resources is greater than a first threshold value, the codebook parameter R is 1 and densities of the N CSI-RS resources are identical but greater than 0.5 RE/RB/port; and determine that the configured time-frequency pattern of the N CSI-RS resources is a second configured time-frequency pattern.

Optionally, the chip further includes a memory 1603, which is used to store necessary computer programs and data.

Those skilled in the art may also understand that the various illustrative logical blocks and steps listed in the embodiments of the disclosure may be implemented by electronic hardware, computer software, or their combination. Whether such functionality is implemented in hardware or software depends on a specific application and overall system design requirements. Those skilled in the art may use various methods to implement the described functions for each specific application, but such implementation should not be understood as going beyond the protection scope of the embodiments of the disclosure.

The embodiments of the disclosure also provide a system for configuring CSI-RS resources, which includes a communication apparatus serving as a terminal (such as the terminal in the foregoing method embodiments) and a communication apparatus serving as a network device in the embodiment of FIG. 14. Alternatively, the system includes a communication device serving as a terminal (such as the terminal in the foregoing method embodiments) and a communication device serving as a network device in the embodiment of FIG. 15.

The disclosure also provides a readable storage medium on which instructions are stored, and when the instructions are executed by a computer, the functions of any one of the above method embodiments are implemented.

The disclosure also provides a computer program product, which implements the functions of any one of the above method embodiments when executed by a computer.

In the above embodiments, it may be implemented in whole or in part by software, hardware, firmware, or any combination. When implemented in software, it may be implemented in whole or in part in the form of a computer program product. The computer program product includes one or more computer programs. When the computer program is loaded and executed on a computer, the processes or functions described in the embodiments of the disclosure are generated in whole or in part. The computer may be a general-purpose computer, a special-purpose computer, a computer network, or other programmable device. The computer program may be stored in or transferred from one computer-readable storage medium to another. For example, the computer program may be transferred from a website, a computer, a server, or a data center to another website, another computer, another server or another data center through a wired means (such as a coaxial cable, an optical fiber, a digital subscriber line (DSL)) or a wireless means (such as infrared, wireless, microwave, etc.). The computer-readable storage medium may be any available medium that may be accessed by a computer or a data storage device such as a server, a data center, etc. that contains one or more available media integrated. The available media may be magnetic media (e.g., a floppy disk, a hard disk, a tape), optical media (e.g., a digital video disc (DVD)), or semiconductor media (e.g., a solid state disk (SSD)) etc.

Those skilled in the art may understand that the first, second, and other numerical numbers involved in the disclosure are only for convenience of description and are not used to limit the scope of the embodiments of the disclosure and also indicate the order.

The term "at least one" in the disclosure can also be described as one or more, and "a plurality of" may be two, three, four or more, which is not limited by the disclosure. In the embodiments of the disclosure, for a technical feature, the technical feature is distinguished by "first", "second", "third", "A", "B", "C" and "D", etc. The technical features described in "first", "second", "third", "A", "B", "C" and "D" are in no particular order or size sequence.

The corresponding relationships shown in each table in the disclosure may be configured or predefined. The values of the information in each table are only examples and may be configured as other values, which is not limited by the disclosure. When configuring the correspondence between information and each parameter, it is not necessarily required to configure all the correspondences shown in each table. For example, in the table in the disclosure, the corresponding relationships shown in some rows may not be configured. For another example, appropriate deformation adjustments may be made based on the above tables, such as splitting, merging, etc. The names of the parameters shown in the titles of the above tables may also be other names that may be understood by the communication device, and the values or expressions of the parameters may also be other values or expressions that may be understood by the communication device. When implementing the above tables, other data structures may also be used, such as arrays, queues, containers, stacks, linear lists, pointers, linked lists, trees, graphs, structures, classes, heaps, hash tables, etc.

Predefinition in the disclosure may be understood as definition, pre-definition, storage, pre-storage, pre-negotiation, pre-configuration, solidification, or pre-burning.

Those skilled in the art may be aware that the units and algorithm steps of each example described in conjunction with the embodiments disclosed herein may be implemented with electronic hardware, or a combination of computer software and electronic hardware. Whether these functions are executed in hardware or software depends on a specific application and design constraints of the technical solution. Those skilled in the art may implement the described functionality using different methods for each specific application, but such implementations should not be considered to go beyond the scope of the disclosure.

Those skilled in the art may clearly understand that for the convenience and simplicity of description, for the specific working processes of the systems, devices and units described above reference may be made to the corresponding processes in the foregoing method embodiments, which will not be repeated here.

The above are only specific embodiments of the disclosure, but the protection scope of the disclosure is not limited. Any person in the technical field may easily think of changes or substitutions within the technical scope disclosed in the disclosure, which should be covered by the protection scope of the disclosure. Therefore, the protection scope of the disclosure should be determined by the protection scope of the claims.

**Claims**

1. A method for configuring channel state information reference signal (CSI-RS) resources, performed by a network device, comprising:

   determining, according to a number of ports of each CSI-RS resource among N CSI-RS resources and/or a number of CSI-RS resources configured for a terminal, a configured time-frequency pattern of the N CSI-RS resources, wherein each CSI-RS resource corresponds to a transmission reception point (TRP) for coherent joint transmission, and N is an integer greater than 1; and
   configuring, according to the configured time-frequency pattern, the N CSI-RS resources for the terminal.

2. The method according to claim 1, wherein determining, according to the number of ports of each CSI-RS resource among N CSI-RS resources and/or the number of CSI-RS resources configured for the terminal, the configured time-frequency pattern of the N CSI-RS resources comprises:

   determining, according to the number of CSI-RS resources and the number of ports of each CSI-RS resource configured for the terminal, a total number of ports of the N CSI-RS resources;
   determining that the total number of ports of the N CSI-RS resources is less than or equal to a first threshold value, and/or that the number of CSI-RS resources is less than or equal to a second threshold value, wherein the first threshold value is a threshold value of a total number of CSI-RS resource ports of the N CSI-RS resources in a single slot, and the second threshold value is a threshold value of a total number of CSI-RS resources of the N CSI-RS resources in the single slot; and
   determining that the configured time-frequency pattern of the N CSI-RS resources is a first configured time-frequency pattern, wherein the first configured time-frequency pattern indicates time-frequency domain resource mapping of the N CSI-RS resources within one slot.

3. The method according to claim 2, wherein configuring, according to the configured time-frequency pattern, the N CSI-RS resources for the terminal comprises:

   determining a subband size configured for the terminal;
   determining a density of each CSI-RS resource configured for the terminal, wherein the density of each CSI-RS resource is identical or different; and
   configuring the N CSI-RS resources within one slot by using the first configured time-frequency pattern, according to the subband size, the density of each CSI-RS resource, and the number of ports of each CSI-RS resource.

4. The method according to claim 2, wherein configuring, according to the configured time-frequency pattern, the N CSI-RS resources for the terminal comprises:

   determining a subband size configured for the terminal;
   determining a density of each CSI-RS resource configured for the terminal, wherein the density of each CSI-RS resource is identical, and the density is half of one resource element/resource block/port (0.5 RE/RB/port);
   determining a number of physical resource blocks (PRBs) configured for the terminal; and
   configuring the N CSI-RS resources within one slot by using the first configured time-frequency pattern, according to a PRB resource index, the subband size, the density of each CSI-RS resource, and the number of ports of each CSI-RS resource.

5. The method according to claim 1, wherein determining, according to the number of ports of each CSI-RS resource among N CSI-RS resources and/or the number of CSI-RS resources configured for the terminal, the configured time-frequency pattern of the N CSI-RS resources comprises:

   determining, according to the number of CSI-RS resources and the number of ports of each CSI-RS resource configured for the terminal, a total number of ports of the N CSI-RS resources;
   determining a density of each CSI-RS resource configured for the terminal;
   determining that the total number of ports of the N CSI-RS resources is greater than a first threshold value, the density of each CSI-RS resource is identical and the density is half of one resource element/resource block/port (0.5 RE/RB/port); and
   determining that the configured time-frequency pattern of the N CSI-RS resources is a first configured time-frequency pattern.

6. The method according to claim 1, wherein determining, according to the number of ports of each CSI-RS resource among N CSI-RS resources and/or the number of CSI-RS resources configured for the terminal, the configured time-frequency pattern of the N CSI-RS resources comprises:

   determining a density of each CSI-RS resource among the N CSI-RS resources and the number of CSI-RS resources configured for the terminal;
   determining that the number of CSI-RS resources is greater than a second threshold value, the density of each CSI-RS resource is identical and the density is half of one resource element/resource block/port (0.5 RE/RB/port); and
   determining that the configured time-frequency pattern of the N CSI-RS resources is a first configured time-frequency pattern.

7. The method according to claim 1, wherein determining, according to the number of ports of each CSI-RS resource among N CSI-RS resources and/or the number of CSI-RS resources configured for the terminal, the configured time-frequency pattern of the N CSI-RS resources comprises:

   determining, according to the number of ports of each CSI-RS resource among the N CSI-RS resources and the number of CSI-RS resources configured for the terminal, a total number of ports of the N CSI-RS resources;
   determining a density of each CSI-RS resource configured for the terminal;
   determining a codebook parameter R configured by the network device for the terminal;
   determining that the total number of ports of the N CSI-RS resources is greater than a first threshold value, the codebook parameter R is 1, the density of each CSI-RS resource is identical and the density is half of one resource element/resource block/port (0.5 RE/RB/port); and
   determining that the configured time-frequency pattern of the N CSI-RS resources is a first configured time-frequency pattern.

8. The method according to any one of claims 5 to 7, wherein configuring, according to the configured time-frequency pattern, the N CSI-RS resources for the terminal comprises:

   determining a subband size configured for the terminal; and
   configuring the N CSI-RS resources within one slot by using the first configured time-frequency pattern, according to the subband size, the density of each CSI-RS resource, and the number of ports of each CSI-RS resource.

9. The method according to any one of claims 5 to 7, wherein configuring, according to the configured time-frequency pattern, the N CSI-RS resources for the terminal comprises:

   determining a subband size configured for the terminal;
   determining a number of physical resource blocks (PRBs) configured for the terminal; and
   configuring the N CSI-RS resources within one slot by using the first configured time-frequency pattern, according to a PRB resource index, the subband size, the density of each CSI-RS resource, and the number of ports of each CSI-RS resource.

10. The method according to claim 4 or 9, wherein configuring the N CSI-RS resources within one slot by using the first configured time-frequency pattern, according to the PRB resource index, the subband size, the density of each CSI-RS resource, and the number of ports of each CSI-RS resource comprises:

configuring a first CSI-RS resource among the N CSI-RS resources at an odd-numbered position of the PRB resource index and configuring a second CSI-RS resource among the N CSI-RS resources at an even-numbered position of the PRB resource index by using the first configured time-frequency pattern, according to the subband size, the density of each CSI-RS resource, and the number of ports of each CSI-RS resource.

11. The method according to claim 1, wherein determining, according to the number of ports of each CSI-RS resource among N CSI-RS resources and/or the number of CSI-RS resources configured for the terminal, the configured time-frequency pattern of the N CSI-RS resources comprises:

determining, according to the number of CSI-RS resources and the number of ports of each CSI-RS resource, a total number of ports of the N CSI-RS resources;
determining that the total number of ports of the N CSI-RS resources is greater than a first threshold value and the number of CSI-RS resources is greater than a second threshold value; and
determining that the configured time-frequency pattern of the N CSI-RS resources is a second configured time-frequency pattern, wherein the second configured time-frequency pattern indicates time-frequency domain resource mapping of the N CSI-RS resources within a plurality of slots.

12. The method according to claim 11, wherein configuring, according to the configured time-frequency pattern, the N CSI-RS resources for the terminal comprises:

determining a subband size configured for the terminal;
determining a density of each CSI-RS resource configured for the terminal; and
configuring the N CSI-RS resources within the plurality of slots by using the second configured time-frequency pattern, according to the subband size, the density of each CSI-RS resource, and the number of ports of each CSI-RS resource.

13. The method according to claim 12, wherein configuring the N CSI-RS resources within the plurality of slots comprises:

configuring a first CSI-RS resource among the N CSI-RS resources within a first slot; and
configuring a second CSI-RS resource among the N CSI-RS resources within a second slot, wherein a time interval between the first slot and the second slot is less than or equal to X slots, where X is a positive integer.

14. The method according to claim 10 or 13, wherein

a number of CSI-RS resources comprised in the first CSI-RS resource is $N_1$, and a calculation formula of $N_1$ is expressed as follows: $N_1 = \left\lceil \frac{N}{2} \right\rceil$ or $\left\lfloor \frac{N}{2} \right\rfloor$, where $\lceil \rceil$ is a rounded-up function, $\lfloor \rfloor$ is a rounded-down function, and N is the number of CSI-RS resources; and
a number of CSI-RS resources comprised in the second CSI-RS resource is $N-N_1$.

15. The method according to claim 13, wherein

a density of the first CSI-RS resource is identical with a density of the second CSI-RS resource; or
a density of the first CSI-RS resource is different from a density of the second CSI-RS resource.

16. The method according to claim 13, wherein

a time-frequency resource position of the first CSI-RS resource is identical with a time-frequency resource position of the second CSI-RS resource; or
a time-frequency resource position of the first CSI-RS resource is different from a time-frequency resource position of the second CSI-RS resource; or
time-frequency resource positions of a part of CSI-RS resources in the first CSI-RS resource are identical with time-frequency resource positions of a part of CSI-RS resources in the second CSI-RS resource; or
time-frequency resource positions of a part of CSI-RS resources in the first CSI-RS resource are different from time-frequency resource positions of a part of CSI-RS resources in the second CSI-RS resource.

17. The method according to claim 13, wherein configuring the first CSI-RS resource among the N CSI-RS resources within the first slot comprises:

   determining that a number of CSI-RS resources comprised in the first CSI-RS resource is greater than or equal to 2; and
   configuring the CSI-RS resources comprised in the first CSI-RS resource within the first slot, wherein densities of the CSI-RS resources comprised in the first CSI-RS resources are identical or different.

18. The method according to claim 13, wherein configuring the first CSI-RS resource among the N CSI-RS resources within the first slot comprises:

   determining that a number of CSI-RS resources comprised in the first CSI-RS resource is greater than or equal to 2;
   determining densities of the CSI-RS resources comprised in the first CSI-RS resource configured for the terminal, wherein the densities of the CSI-RS resources comprised in the first CSI-RS resource are identical, and the densities are half of one resource element/resource block/port (0.5 RE/RB/port); and
   configuring the first CSI-RS resource within the first slot according to a physical resource block (PRB) resource index and the densities of the CSI-RS resources comprised in the first CSI-RS resource.

19. The method according to claim 13, wherein configuring the second CSI-RS resource among the N CSI-RS resources within the second slot comprises:

   determining that a number of CSI-RS resources comprised in the second CSI-RS resource is greater than or equal to 2; and
   configuring the CSI-RS resources comprised in the second CSI-RS resource within the second slot, wherein densities of the CSI-RS resources comprised in the second CSI-RS resource are identical or different.

20. The method according to claim 13, wherein configuring the second CSI-RS resource among the N CSI-RS resources within the second slot comprises:

   determining that a number of CSI-RS resources comprised in the second CSI-RS resource is greater than or equal to 2;
   determining densities of the CSI-RS resources comprised in the second CSI-RS resource configured for the terminal, wherein the densities of the CSI-RS resources comprised in the second CSI-RS resource are identical, and the densities are half of one resource element/resource block/port (0.5 RE/RB/port); and
   configuring the second CSI-RS resource within the second slot according to a physical resource block (PRB) resource index and the densities of the CSI-RS resources comprised in the second CSI-RS resource.

21. The method according to claim 1, wherein determining, according to the number of ports of each CSI-RS resource among N CSI-RS resources and/or the number of CSI-RS resources configured for the terminal, the configured time-frequency pattern of the N CSI-RS resources comprises:

   determining, according to the number of CSI-RS resources and the number of ports of each CSI-RS resource, a total number of ports of the N CSI-RS resources;
   determining a density of each CSI-RS resource configured for the terminal;
   determining that the total number of ports of the N CSI-RS resources is greater than a first threshold value and densities of the N CSI-RS resources are different, or that the total number of ports of the N CSI-RS resources is greater than a first threshold value and densities of the N CSI-RS resources are identical but greater than half of one resource element/resource block/port (0.5 RE/RB/port); and
   determining that the configured time-frequency pattern of the N CSI-RS resources is a second configured time-frequency pattern.

22. The method according to claim 1, wherein determining, according to the number of ports of each CSI-RS resource among N CSI-RS resources and/or the number of CSI-RS resources configured for the terminal, the configured time-frequency pattern of the N CSI-RS resources comprises:

   determining a density of each CSI-RS resource and the number of ports of each CSI-RS resource among the N CSI-RS resources configured for the terminal;

determining that the number of CSI-RS resources is greater than a second threshold value and densities of the N CSI-RS resources are different, or that the number of CSI-RS resources is greater than a second threshold value and densities of the N CSI-RS resources are identical but greater than half of one resource element/resource block/port (0.5 RE/RB/port); and

determining that the configured time-frequency pattern of the N CSI-RS resources is a second configured time-frequency pattern.

23. The method according to claim 1, wherein determining, according to the number of ports of each CSI-RS resource among N CSI-RS resources and/or the number of CSI-RS resources configured for the terminal, the configured time-frequency pattern of the N CSI-RS resources comprises:

determining, according to the number of CSI-RS resources and the number of ports of each CSI-RS resource, a total number of ports of the N CSI-RS resources;

determining a codebook parameter R configured by the network device for the terminal;

determining a density of each CSI-RS resource configured for the terminal;

determining that the total number of ports of the N CSI-RS resources is greater than a first threshold value, the codebook parameter R is 1 and densities of the N CSI-RS resources are different, or that the total number of ports of the N CSI-RS resources is greater than a first threshold value, the codebook parameter R is 1 and densities of the N CSI-RS resources are identical but greater than half of one resource element/resource block/port (0.5 RE/RB/port); and

determining that the configured time-frequency pattern of the N CSI-RS resources is a second configured time-frequency pattern.

24. The method according to any one of claims 21 to 23, wherein configuring, according to the configured time-frequency pattern, the N CSI-RS resources for the terminal comprises:

determining a subband size configured for the terminal; and

configuring the N CSI-RS resources within a plurality of slots by using the second configured time-frequency pattern according to the subband size, the density of each CSI-RS resource, and the number of ports of each CSI-RS resource.

25. A method for configuring channel state information reference signal (CSI-RS) resources, performed by a terminal, comprising:

receiving CSI-RS resource configuration information and/or CSI reporting resource configuration information sent by a network device, wherein the CSI-RS resource configuration information comprises a number of ports of each CSI-RS resource among N CSI-RS resources and/or a number of CSI-RS resources, each CSI-RS resource corresponds to a transmission reception point (TRP) for coherent joint transmission, and N is an integer greater than 1;

determining, according to the CSI-RS resource configuration information and/or the CSI reporting resource configuration information, a configured time-frequency pattern of the N CSI-RS resources; and

determining, according to the configured time-frequency pattern, resource positions of the N CSI-RS resources.

26. The method according to claim 25, wherein determining, according to the CSI-RS resource configuration information and/or the CSI reporting resource configuration information, the configured time-frequency pattern of the N CSI-RS resources comprises:

determining, according to the number of CSI-RS resources and the number of ports of each CSI-RS resource, a total number of ports of the N CSI-RS resources;

determining that the total number of ports of the N CSI-RS resources is less than or equal to a first threshold value, and/or that the number of CSI-RS resources is less than or equal to a second threshold value, wherein the first threshold value is a threshold value of a total number of CSI-RS resource ports of the N CSI-RS resources in a single slot, and the second threshold value is a threshold value of a total number of CSI-RS resources of the N CSI-RS resources in the single slot; and

determining that the configured time-frequency pattern of the N CSI-RS resources is a first configured time-frequency pattern, wherein the first configured time-frequency pattern indicates time-frequency domain resource mapping of the N CSI-RS resources within one slot.

27. The method according to claim 25, wherein determining, according to the CSI-RS resource configuration information and/or the CSI reporting resource configuration information, the configured time-frequency pattern of the N CSI-RS resources comprises:

determining, according to the number of the CSI-RS resources and the number of ports of each CSI-RS resource, a total number of ports of the N CSI-RS resources;
determining a density of each CSI-RS resource configured by the network device for the terminal;
determining that the total number of ports of the N CSI-RS resources is greater than a first threshold value, the density of each CSI-RS resource is identical and the density is half of one resource element/resource block/port (0.5 RE/RB/port); and
determining that the configured time-frequency pattern of the N CSI-RS resources is a first configured time-frequency pattern.

28. The method according to claim 25, wherein determining, according to the CSI-RS resource configuration information and/or the CSI reporting resource configuration information, the configured time-frequency pattern of the N CSI-RS resources comprises:

determining a density of each CSI-RS resource configured by the network device for the terminal;
determining that the number of CSI-RS resources is greater than a second threshold value, the density of each CSI-RS resource is identical and the density is half of one resource element/resource block/port (0.5 RE/RB/port); and
determining that the configured time-frequency pattern of the N CSI-RS resources is a first configured time-frequency pattern.

29. The method according to claim 25, wherein determining, according to the CSI-RS resource configuration information and/or the CSI reporting resource configuration information, the configured time-frequency pattern of the N CSI-RS resources comprises:

determining, according to the number of the CSI-RS resources and the number of ports of each CSI-RS resource, a total number of ports of the N CSI-RS resources;
determining a density of each CSI-RS resource configured by the network device for the terminal;
determining a codebook parameter R configured by the network device for the terminal;
determining that the total number of ports of the N CSI-RS resources is greater than a first threshold value, the codebook parameter R is 1, the density of each CSI-RS resource is identical and the density is half of one resource element/resource block/port (0.5 RE/RB/port); and
determining that the configured time-frequency pattern of the N CSI-RS resources is a first configured time-frequency pattern.

30. The method according to claim 25, wherein determining, according to the CSI-RS resource configuration information and/or the CSI reporting resource configuration information, the configured time-frequency pattern of the N CSI-RS resources comprises:

determining, according to the number of the CSI-RS resources and the number of ports of each CSI-RS resource, a total number of ports of the N CSI-RS resources;
determining that the total number of ports of the N CSI-RS resources is greater than a first threshold value and the number of CSI-RS resources is greater than a second threshold value; and
determining that the configured time-frequency pattern of the N CSI-RS resources is a second configured time-frequency pattern, wherein the second configured time-frequency pattern indicates time-frequency domain resource mapping of the N CSI-RS resources within a plurality of slots.

31. The method according to claim 25, wherein determining, according to the CSI-RS resource configuration information and/or the CSI reporting resource configuration information, the configured time-frequency pattern of the N CSI-RS resources comprises:

determining, according to the number of the CSI-RS resources and the number of ports of each CSI-RS resource, a total number of ports of the N CSI-RS resources;
determining a density of each CSI-RS resource configured by the network device for the terminal;
determining that the total number of ports of the N CSI-RS resources is greater than a first threshold value and densities of the N CSI-RS resources are different, or that the total number of ports of the N CSI-RS resources is greater than a first threshold value and densities of the N CSI-RS resources are identical but greater than half of one resource element/resource block/port (0.5 RE/RB/port); and

determining that the configured time-frequency pattern of the N CSI-RS resources is a second configured time-frequency pattern.

32. The method according to claim 25, wherein determining, according to the CSI-RS resource configuration information and/or the CSI reporting resource configuration information, the configured time-frequency pattern of the N CSI-RS resources comprises:

determining a density of each CSI-RS resource configured by the network device for the terminal;
determining that the number of CSI-RS resources is greater than a second threshold value and densities of the N CSI-RS resources are different, or that the number of CSI-RS resources is greater than a second threshold value and densities of the N CSI-RS resources are identical but greater than half of one resource element/resource block/port (0.5 RE/RB/port); and
determining that the configured time-frequency pattern of the N CSI-RS resources is a second configured time-frequency pattern.

33. The method according to claim 25, wherein determining, according to the CSI-RS resource configuration information and/or the CSI reporting resource configuration information, the configured time-frequency pattern of the N CSI-RS resources comprises:

determining, according to the number of the CSI-RS resources and the number of ports of each CSI-RS resource, a total number of ports of the N CSI-RS resources;
determining a codebook parameter R configured by the network device for the terminal;
determining a density of each CSI-RS resource configured by the network device for the terminal;
determining that the total number of ports of the N CSI-RS resources is greater than a first threshold value, the codebook parameter R is 1 and densities of the N CSI-RS resources are different, or that the total number of ports of the N CSI-RS resources is greater than a first threshold value, the codebook parameter R is 1 and densities of the N CSI-RS resources are identical but greater than half of one resource element/resource block/port (0.5 RE/RB/port); and
determining that the configured time-frequency pattern of the N CSI-RS resources is a second configured time-frequency pattern.

34. A communication apparatus, comprising:

a processing module, configured to determine, according to a number of ports of each channel state information reference signal (CSI-RS) resource among N CSI-RS resources and/or a number of CSI-RS resources configured for a terminal, a configured time-frequency pattern of the N CSI-RS resources, wherein each CSI-RS resource corresponds to a transmission reception point (TRP) for coherent joint transmission, and N is an integer greater than 1;
wherein the processing module further configures, according to the configured time-frequency pattern, the N CSI-RS resources for the terminal.

35. A communication device, comprising:

a transceiver module, configured to receive channel state information reference signal (CSI-RS) resource configuration information and/or CSI reporting resource configuration information sent by a network device, wherein the CSI-RS resource configuration information comprises a number of ports of each CSI-RS resource among N CSI-RS resources and/or a number of CSI-RS resources, each CSI-RS resource corresponds to a transmission reception point (TRP) for coherent joint transmission, and N is an integer greater than 1; and
a processing module, configured to determine, according to the CSI-RS resource configuration information and/or the CSI reporting resource configuration information, a configured time-frequency pattern of the N CSI-RS resources;
wherein the processing module is configured to determine, according to the configured time-frequency pattern, resource positions of the N CSI-RS resources.

36. A communication device, comprising a processor and a memory storing a computer program, wherein when the computer program is executed by the processor, the communication device is caused to perform the method according to any one of claims 1 to 24.

37. A communication device, comprising a processor and a memory storing a computer program, wherein when the computer program is executed by the processor, the communication device is caused to perform the method according to any one of claims 25 to 33.

38. A computer-readable storage medium having instructions stored thereon that, when executed, cause the method according to any one of claims 1 to 24 to be implemented.

39. A computer-readable storage medium having instructions stored thereon that, when executed, cause the method according to any one of claims 25 to 33 to be implemented.

FIG. 1

determining, according to a number of ports of each CSI-RS resource among N CSI-RS resources and/or a number of CSI-RS resources configured for a terminal, a configured time-frequency pattern of the N CSI-RS resources　　201

configuring, according to the configured time-frequency pattern, the N CSI-RS resources for the terminal　　202

FIG. 2

determining, according to the number of CSI-RS resources and the number of ports of each CSI-RS resource, a total number of ports of the N CSI-RS resources　　301

determining that the total number of ports of the N CSI-RS resources is less than or equal to a first threshold value, and/or that the number of CSI-RS resources is less than or equal to a second threshold value　　302

determining that the configured time-frequency pattern of the N CSI-RS resources is a first configured time-frequency pattern　　303

configuring, according to the configured time-frequency pattern, the N CSI-RS resources for the terminal　　304

FIG. 3

2n+3 RB

2n+2 RB

2n+1 RB

2n RB

3 RB

2 RB

$f$

1 RB

0 RB

$t$

the 1st CSI-RS resource

the 2nd CSI-RS resource

FIG. 4

determining, according to the number of CSI-RS resources and the number of ports of each CSI-RS resource, a total number of ports of the N CSI-RS resources — 501

determining a density of each CSI-RS resource configured for the terminal — 502

determining that the total number of ports of the N CSI-RS resources is greater than a first threshold value, the density of each CSI-RS resource is identical and the density is 0.5 RE/RB/port — 503

determining that the configured time-frequency pattern of the N CSI-RS resources is a first configured time-frequency pattern — 504

configuring, according to the configured time-frequency pattern, the N CSI-RS resources for the terminal — 505

FIG. 5

determining a density of each CSI-RS resource among the N CSI-RS resources and the number of CSI-RS resources configured for the terminal ⟋—601

determining that the number of CSI-RS resources is greater than a second threshold value, the density of each CSI-RS resource is identical and the density is 0.5 RE/RB/port ⟋—602

determining that the configured time-frequency pattern of the N CSI-RS resources is a first configured time-frequency pattern ⟋—603

configuring, according to the configured time-frequency pattern, the N CSI-RS resources for the terminal ⟋—604

FIG. 6

determining, according to the number of CSI-RS resources and the number of ports of each CSI-RS resource, a total number of ports of the N CSI-RS resources ⟋—701

determining a density of each CSI-RS resource configured for the terminal ⟋—702

determining a codebook parameter R configured by the network device for the terminal ⟋—703

determining that the total number of ports of the N CSI-RS resources is greater than a first threshold value, the codebook parameter R is 1, the density of each CSI-RS resource is identical and the density is 0.5 RE/RB/port ⟋—704

determining that the configured time-frequency pattern of the N CSI-RS resources is a first configured time-frequency pattern ⟋—705

configuring, according to the configured time-frequency pattern, the N CSI-RS resources for the terminal ⟋—706

FIG. 7

determining, according to the number of CSI-RS resources and the number of ports of each CSI-RS resource, a total number of ports of the N CSI-RS resources — 801

determining that the total number of ports of the N CSI-RS resources is greater than a first threshold value and the number of CSI-RS resources is greater than a second threshold value — 802

determining that the configured time-frequency pattern of the N CSI-RS resources is a second configured time-frequency pattern — 803

configuring, according to the configured time-frequency pattern, the N CSI-RS resources for the terminal — 804

FIG. 8

$1^{st}$ and $2^{nd}$ CSI-RS resources

$3^{rd}$ and $4^{th}$ CSI-RS resources

$f$

$t$

$T^{th}$ slot    $(T+1)^{th}$ slot

FIG. 9

determining, according to the number of ports of each CSI-RS resource among the N CSI-RS resources and the number of CSI-RS resources, a total number of ports of the N CSI-RS resources —1001

determining a density of each CSI-RS resource configured for the terminal —1002

determining that the total number of ports of the N CSI-RS resources is greater than a first threshold value and densities of the N CSI-RS resources are different, or that the total number of ports of the N CSI-RS resources is greater than a first threshold value and densities of the N CSI-RS resources are identical but greater than 0.5 RE/RB/port —1003

determining that the configured time-frequency pattern of the N CSI-RS resources is a second configured time-frequency pattern —1004

configuring, according to the configured time-frequency pattern, the N CSI-RS resources for the terminal —1005

FIG. 10

determining a density of each CSI-RS resource and the number of ports of each CSI-RS resource among the N CSI-RS resources configured for the terminal —1101

determining that the number of CSI-RS resources is greater than a second threshold value and densities of the N CSI-RS resources are different, or that the number of CSI-RS resources is greater than a second threshold value and densities of the N CSI-RS resources are identical but greater than 0.5 RE/RB/port —1102

determining that the configured time-frequency pattern of the N CSI-RS resources is a second configured time-frequency pattern —1103

configuring, according to the configured time-frequency pattern, the N CSI-RS resources for the terminal —1104

FIG. 11

determining, according to the number of CSI-RS resources and the number of ports of each CSI-RS resource, a total number of ports of the N CSI-RS resources ⌐1201

↓

determining a codebook parameter R configured by the network device for the terminal ⌐1202

↓

determining a density of each CSI-RS resource configured for the terminal ⌐1203

↓

determining that the total number of ports of the N CSI-RS resources is greater than a first threshold value, the codebook parameter R is 1 and densities of the N CSI-RS resources are different, or that the total number of ports of the N CSI-RS resources is greater than a first threshold value, the codebook parameter R is 1 and densities of the N CSI-RS resources are identical but greater than 0.5 RE/RB/port ⌐1204

↓

determining that the configured time-frequency pattern of the N CSI-RS resources is a second configured time-frequency pattern ⌐1205

↓

configuring, according to the configured time-frequency pattern, the N CSI-RS resources for the terminal ⌐1206

FIG. 12

receiving CSI-RS resource configuration information and/or CSI reporting resource configuration information sent by a network device ⌐1301

↓

determining, according to the CSI-RS resource configuration information and/or the CSI reporting resource configuration information, a configured time-frequency pattern of the N CSI-RS resources ⌐1302

↓

determining, according to the configured time-frequency pattern, resource positions of the N CSI-RS resources ⌐1303

FIG. 13

communication apparatus

transceiver module —— 1401

processing module —— 1402

—— 140

FIG. 14

communication device

interface circuit —— 1507

antenna —— 1506

transceiver —— 1505

processor —— 1501

memory

computer program —— 1504

—— 1502

—— 150

FIG. 15

chip

processor —— 1601

interface —— 1602

memory —— 1603

—— 160

FIG. 16

## INTERNATIONAL SEARCH REPORT

| International application No. |
|---|
| **PCT/CN2023/086739** |

| A. | CLASSIFICATION OF SUBJECT MATTER |
|---|---|

H04W 72/0446(2023.01)i

According to International Patent Classification (IPC) or to both national classification and IPC

| B. | FIELDS SEARCHED |
|---|---|

Minimum documentation searched (classification system followed by classification symbols)

IPC:H04W, H04Q, H04L

Documentation searched other than minimum documentation to the extent that such documents are included in the fields searched

Electronic data base consulted during the international search (name of data base and, where practicable, search terms used)

CNTXT, CNKI, CJFD, WPABS, ENTXT, IEEE, 3GPP: 信道状态信息, 参考信号, 资源, 端口, 图样, 协作, 传输接收节点, 配置, CSI, RS, TRP, reference signal, resource, port, pattern, Transmission receiver point, configuration

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | CN 108809503 A (HUAWEI TECHNOLOGIES CO., LTD.) 13 November 2018 (2018-11-13) description, paragraphs 0056-0108 | 1, 25, 34-39 |
| X | CN 108111272 A (ZTE CORP.) 01 June 2018 (2018-06-01) description, paragraphs 0115-0330 | 1, 25, 34-39 |
| A | CN 106559162 A (SONY CORPORATION) 05 April 2017 (2017-04-05) entire document | 1-39 |
| A | CN 109462461 A (CHINA ACADEMY OF TELECOMMUNICATIONS TECHNOLOGY) 12 March 2019 (2019-03-12) entire document | 1-39 |
| A | CN 114402677 A (HUAWEI TECHNOLOGIES CO., LTD.) 26 April 2022 (2022-04-26) entire document | 1-39 |
| A | WO 2023010245 A1 (GUANGDONG OPPO MOBILE TELECOMMUNICATIONS CORP., LTD.) 09 February 2023 (2023-02-09) entire document | 1-39 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 November 2023** | **07 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/086739** |

| Patent document cited in search report | | | Publication date (day/month/year) | Patent family member(s) | | | Publication date (day/month/year) |
|---|---|---|---|---|---|---|---|
| CN | 108809503 | A | 13 November 2018 | EP | 3641174 | A1 | 22 April 2020 |
| | | | | EP | 3641174 | A4 | 13 May 2020 |
| | | | | EP | 3641174 | B1 | 08 September 2021 |
| | | | | US | 2020067751 | A1 | 27 February 2020 |
| | | | | US | 11381436 | B2 | 05 July 2022 |
| | | | | BR | 112019023162 | A2 | 02 June 2020 |
| | | | | WO | 2018202103 | A1 | 08 November 2018 |
| CN | 108111272 | A | 01 June 2018 | EP | 4246867 | A2 | 20 September 2023 |
| | | | | EP | 3667978 | A1 | 17 June 2020 |
| | | | | EP | 3667978 | A4 | 12 August 2020 |
| | | | | MX | 2020001552 | A | 03 August 2020 |
| | | | | KR | 20220054449 | A | 02 May 2022 |
| | | | | US | 2023246754 | A1 | 03 August 2023 |
| | | | | US | 2020177416 | A1 | 04 June 2020 |
| | | | | US | 11451414 | B2 | 20 September 2022 |
| | | | | JP | 2020529797 | A | 08 October 2020 |
| | | | | JP | 7293191 | B2 | 19 June 2023 |
| | | | | US | 2023068244 | A1 | 02 March 2023 |
| | | | | WO | 2019029378 | A1 | 14 February 2019 |
| | | | | RU | 2729213 | C1 | 05 August 2020 |
| | | | | KR | 20200035300 | A | 02 April 2020 |
| | | | | US | 2023239090 | A1 | 27 July 2023 |
| CN | 106559162 | A | 05 April 2017 | EP | 3352395 | A1 | 25 July 2018 |
| | | | | EP | 3352395 | A4 | 24 October 2018 |
| | | | | US | 2018234278 | A1 | 16 August 2018 |
| | | | | US | 10666478 | B2 | 26 May 2020 |
| | | | | WO | 2017050209 | A1 | 30 March 2017 |
| | | | | KR | 20180057664 | A | 30 May 2018 |
| | | | | JP | 2018534802 | A | 22 November 2018 |
| | | | | CA | 2998419 | A1 | 30 March 2017 |
| CN | 109462461 | A | 12 March 2019 | None | | | |
| CN | 114402677 | A | 26 April 2022 | None | | | |
| WO | 2023010245 | A1 | 09 February 2023 | None | | | |

Form PCT/ISA/210 (patent family annex) (July 2022)